# FASCICULE DE BREVET EUROPEEN

(11) **EP 4 313 571 B1**
(45) Date de publication et mention de la délivrance du brevet: **04.06.2025**
(21) Numéro de dépôt: 22714903.6
(22) Date de dépôt: 17.03.2022
(51) Int. Cl.: B29D 30/06, B29D 30/12, B29D 30/16

(54) **OUTILLAGE A NOYAU RAINURE POUR LA FABRICATION DE BANDAGES PNEUMATIQUES RENFORCES PAR DES HAUBANS QUI TRAVERSENT LA CAVITÉ DE GONFLAGE**
WERKZEUG MIT GENUTETEM KERN ZUR HERSTELLUNG VON LUFTREIFEN, DIE DURCH VERSTÄRKUNGSSTREBEN DURCH DEN INFLATIONSHOHLRAUM VERSTÄRKT SIND
GROOVED-CORE TOOLING FOR MANUFACTURING PNEUMATIC TYRES REINFORCED BY STAYS PASSING THROUGH THE INFLATION CAVITY

(30) Priorité: 22.03.2021 FR 2102830
(43) Date de publication de la demande: 07.02.2024
(73) Titulaire: COMPAGNIE GENERALE DES ETABLISSEMENTS MICHELIN, 63000 Clermont-Ferrand (FR)
(72) Inventeur: ROUBY, Mickael, 63040 CLERMONT-FERRAND CEDEX 9 (FR); NAGODE, Clément, 63040 CLERMONT-FERRAND CEDEX 9 (FR); SIMONELLI, Thomas, 63040 CLERMONT-FERRAND CEDEX 9 (FR); ROUYET, François, 63040 CLERMONT-FERRAND CEDEX 9 (FR)
(74) Mandataire: M.F.P. Michelin
(86) Numéro de dépôt international: PCT/FR2022/050489
(87) Numéro de publication internationale: WO 2022/200718

(56) Documents cités:
- EP-A1- 2 221 159
- WO-A1-03/055667
- WO-A1-2016/157001
- AT-B- 378 506
- FR-A1- 2 583 399
- JP-A- 2003 311 741

## Description

La présente invention concerne le domaine général de la fabrication de bandages toroïdaux, et plus particulièrement de bandages pneumatiques destinés à équiper des roues de véhicules. Des exemples pour la fabrication de bandages pneumatiques avec des outillages peuvent être trouvés dans les demandes de brevet JP 2003311741 A, AT 378 506 B et FR 2583399 A.

Pour améliorer le comportement, notamment la tenue en dérive, des bandages pneumatiques, la demanderesse a eu l'idée de mettre en œuvre des renforts de type haubans qui s'étendent au sein de la cavité de gonflage torique que délimite le bandage, et qui relient chacun un point d'ancrage situé dans le flanc ou le bourrelet du bandage à un point d'ancrage situé au niveau du sommet du bandage.

Bien entendu, les outils de fabrication en usage industriellement sont inadaptés à la réalisation de tels bandages haubanés, en raison de la forme très spécifique de ces derniers.

Les objets assignés à l'invention visent par conséquent à remédier aux inconvénients susmentionnés et proposer un outillage selon la revendication 1, et un procédé de fabrication selon la revendication 12, permettant d'obtenir de manière relativement simple et reproductible un bandage haubané de qualité.

Les objets assignés à l'invention sont atteints au moyen d'un outillage destiné à la fabrication d'un bandage toroïdal comprenant un sommet destiné à former une bande de roulement, un premier bourrelet annulaire et un second bourrelet annulaire conçus pour permettre l'accrochage du bandage sur un support de montage tel qu'une jante, ainsi qu'un premier flanc et un second flanc qui relient le sommet respectivement au premier bourrelet et au second bourrelet, le sommet, les premier et second flancs et les premier et second bourrelets formant dans leur ensemble une paroi présentant une surface interne concave qui délimite une cavité du bandage, ledit outillage comprenant un noyau toroïdal présentant, autour de son axe central, une surface externe convexe, dite « surface de réception », qui possède une forme conjuguée à la surface interne de la paroi du bandage et qui comprend à cet effet une zone sommitale, radialement externe, destinée à recevoir des composants constitutifs du sommet du bandage, et, de part et d'autre axialement de ladite zone sommitale, une première zone latérale rabattue vers l'axe central et destinée à recevoir des composants constitutifs du premier flanc et du premier bourrelet ainsi qu'une seconde zone latérale rabattue vers l'axe central et destinée à recevoir des composants constitutifs du second flanc et du second bourrelet, de sorte que le noyau matérialise un volume, dit « volume réservé », qui est délimité extérieurement par la surface de réception et qui correspond à la cavité du bandage, l'outillage étant caractérisé en ce que le noyau possède une pluralité de passages qui s'étendent à l'intérieur du volume réservé, sous la surface de réception, et qui s'ouvrent sur ladite surface de réception de manière que chacun desdits passages relie la zone sommitale de la surface de réception à l'une des première et seconde zones latérales afin que le noyau puisse recevoir, à l'intérieur desdits passages, des éléments de renfort, dits « haubans », qui sont conçus pour intégrer à demeure la structure du bandage et s'étendre chacun dans la cavité du bandage en reliant un point d'ancrage sommital situé dans le sommet du bandage à un point d'ancrage latéral situé dans l'un des flancs ou des bourrelets du bandage.

Avantageusement, l'utilisation d'un noyau selon l'invention permet de positionner les haubans aux emplacement désirés au sein du volume réservé par le noyau, et par conséquent dans la région de l'espace qui deviendra par la suite la cavité du bandage après que l'on aura constitué ledit bandage et retiré le noyau.

Avantageusement, lors de la mise en place des haubans au sein du noyau, une portion de chaque hauban se trouve à l'intérieur du passage correspondant, et donc dans la région de l'espace qui correspond à la future cavité du bandage, tandis que les extrémités dudit hauban font saillie hors du passage, sur la surface de réception.

Ainsi, lorsque l'on vient ensuite poser sur la surface de réception du noyau, par exemple par enroulement spiral de bande continues, les différents composants à base de caoutchouc qui sont constitutifs de la paroi du bandage, lesdites extrémités de chaque hauban se retrouvent intégrées immédiatement et définitivement à la structure de la paroi du bandage, tandis que la portion intermédiaire du hauban considéré, située dans le passage, se trouve en retrait de la surface de réception et reste donc détachée et distante de la paroi du bandage pendant et après la pose des composants constitutifs de la paroi du bandage, et de préférence se trouve ainsi d'emblée dans la position que ladite portion intermédiaire du hauban occupera définitivement au sein de la cavité du bandage.

Par ailleurs, puisque le noyau présente une forme torique qui correspond à la forme finale du bandage que l'on souhaite obtenir, la paroi dudit bandage est avantageusement, de façon connue en soi, directement conformée à la forme voulue, par la simple pose des composants constitutifs de la paroi du bandage sur le noyau.

On place ensuite le noyau portant le bandage dans un moule afin de réaliser une cuisson du bandage, qui permet de vulcaniser les composants de la paroi dudit bandage qui sont à base de caoutchouc. Après cette opération de cuisson, on sépare le noyau du bandage, en libérant ainsi la cavité du bandage et en abandonnant à demeure les haubans en place dans ladite cavité.

Avantageusement, l'outillage selon l'invention permet donc d'obtenir d'emblée, et de manière reproductible, un bandage haubané convenablement conformé, sans risque de mal positionner ou d'endommager les haubans pendant la fabrication du bandage.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :

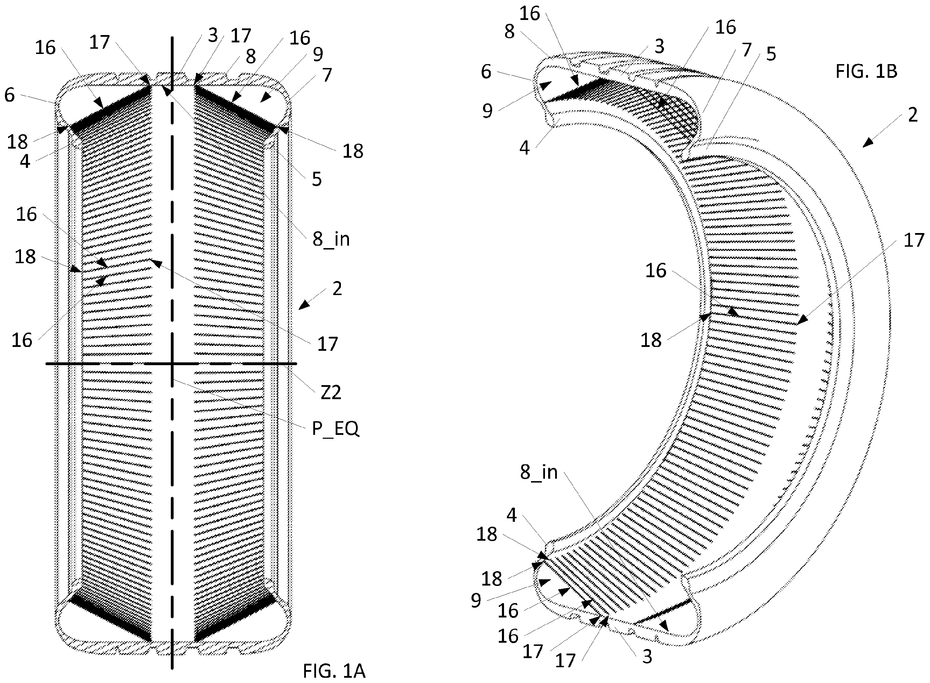

Les figures 1A et 1B illustrent, respectivement selon une vue en coupe dans un plan radial et selon une vue en perspective avec arrachement de matière selon un plan radial, un exemple de bandage haubané réalisé selon l'invention, au sein duquel les points d'ancrage sommital et latéral de chaque hauban sont situés à un même azimut autour de l'axe central du bandage, de sorte que les haubans s'étendent suivant des plans radiaux contenant l'axe central du bandage.

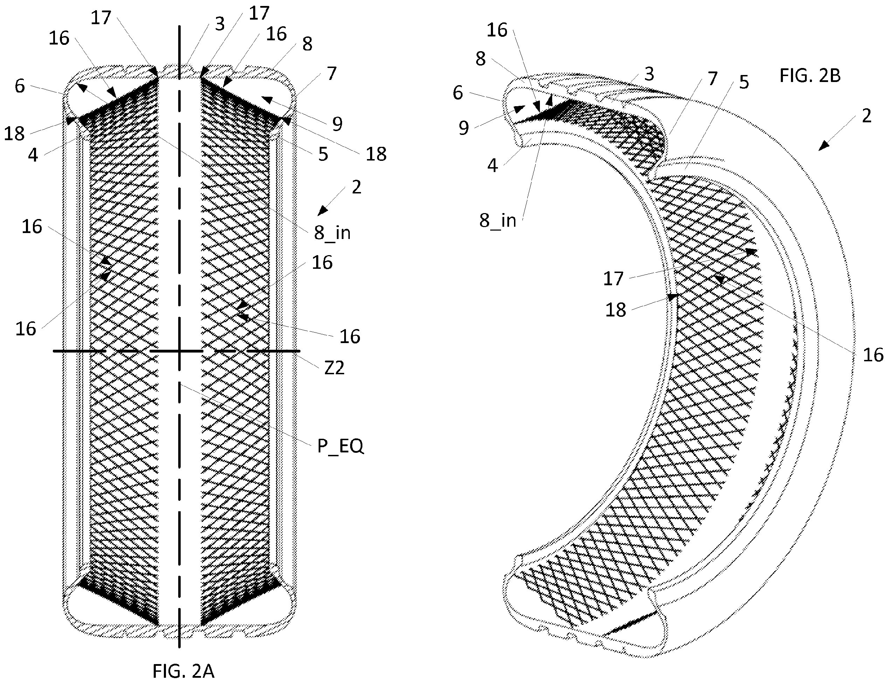

Les figures 2A et 2B illustrent, respectivement selon une vue en coupe dans un plan radial et selon une vue en perspective avec arrachement de matière selon un plan radial, un autre exemple de bandage haubané réalisé selon l'invention, au sein duquel d'une part les points d'ancrage sommital et latéral de chaque hauban sont décalés angulairement en azimut l'un par rapport à l'autre autour de l'axe central du bandage, et d'autre part le bandage comprend, dans chaque hémisphère du bandage, deux jeux de haubans, dont le premier présente un décalage angulaire des points d'ancrage dans un sens et le second un décalage angulaire dans l'autre sens, de sorte que les haubans d'un même hémisphère s'entrecroisent.

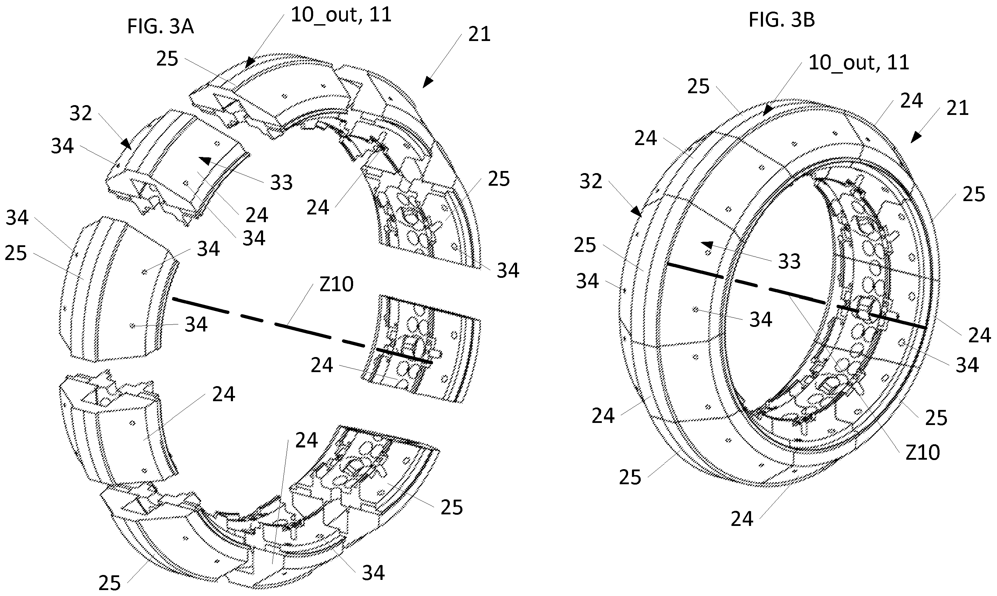

Les figures 3A et 3B illustrent, selon des vues en perspective respectivement éclatée et assemblée, un sous-ensemble annulaire formant une couronne centrale d'un noyau selon l'invention, ladite couronne centrale formant une portion centrale de la zone sommitale destinée à recevoir les composants constitutifs du sommet du bandage, et ladite couronne centrale étant subdivisée angulairement en secteurs, qui forment en alternance des secteurs dits voûtes et des secteurs dits clefs conçus pour verrouiller les voûtes en position.

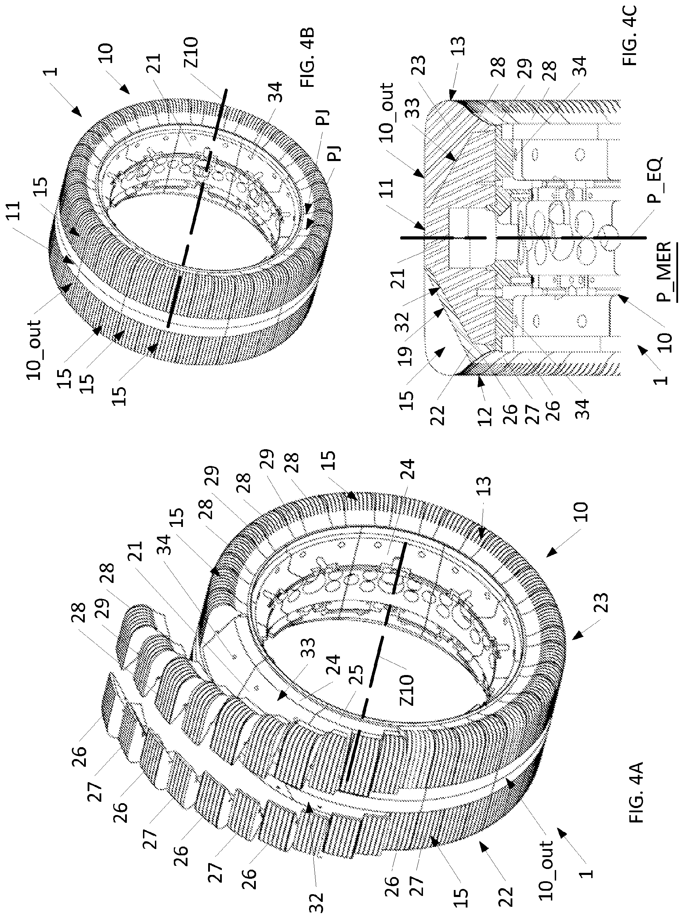

Les figures 4A, 4B et 4C illustrent, respectivement selon une vue en perspective partiellement éclatée, une vue en perspective assemblée, et une vue de détail en coupe dans un plan radial, un outillage selon l'invention comprenant la couronne centrale des figures 3A et 3B sur laquelle sont montés deux sous-ensembles annulaires dits « oreilles » qui sont destinés à recevoir chacun les composants constitutifs d'un flanc du bandage, et qui contiennent les passages pour les haubans, ici sous forme de rainures qui sont orientées selon les plans radiaux pour réaliser un bandage tel qu'illustré sur les figures 1A et 1B. Pour faciliter le démontage et l'extraction du noyau hors du bandage, chaque oreille est subdivisée angulairement en secteurs, formant alternativement des voûtes et des clefs. On notera que, par commodité de représentation, les moitiés gauche et droite de la figure 4C correspondent à des coupes selon deux plans radiaux distincts, légèrement décalés l'un par rapport à l'autre en azimut autour de l'axe central du noyau, de sorte que la moitié située ici à gauche du plan équatorial est coupée à travers la partie creuse d'une rainure, tandis que la moitié située à droite du plan équatoriale est coupée à travers la paroi latérale pleine qui délimite ladite rainure.

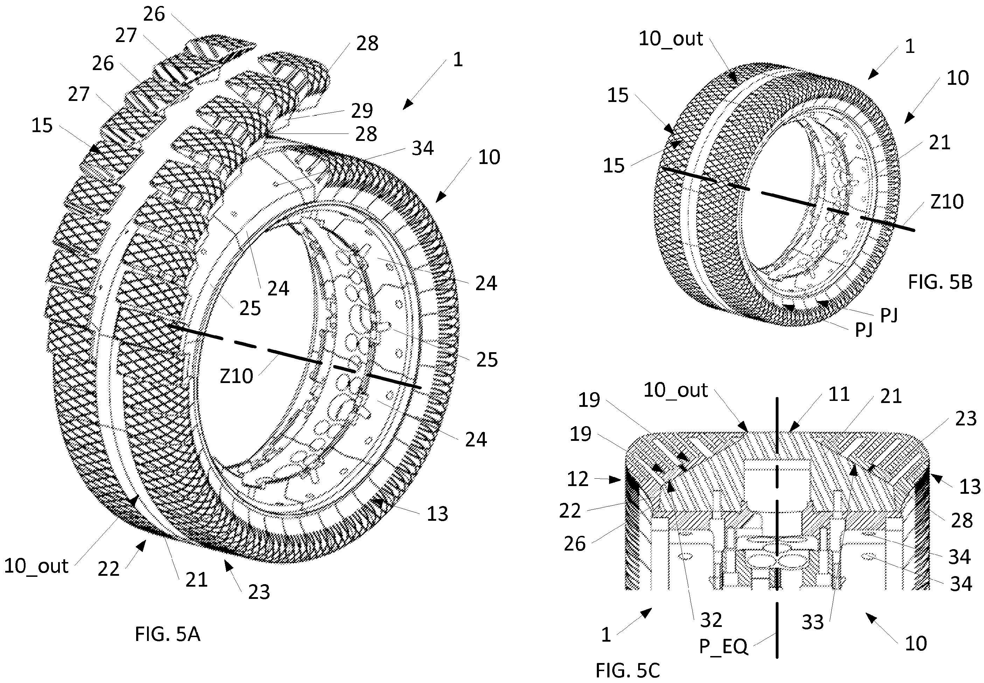

Les figures 5A, 5B et 5C illustrent, respectivement selon une vue en perspective partiellement éclatée, une vue en perspective assemblée, et une vue de détail en coupe dans un plan radial, un outillage selon l'invention comprenant la couronne centrale des figures 3A et 3B sur laquelle sont montés deux sous-ensembles annulaires dits « oreilles » qui sont destinés à recevoir chacun les composants constitutifs d'un flanc du bandage, et qui contiennent les passages pour les haubans, ici sous forme de rainures entrecroisées pour réaliser un bandage tel qu'illustré sur les figures 2A et 2B. De même que pour la variante des figures 4A à 4C, chaque oreille est subdivisée angulairement en secteurs, formant alternativement des voûtes et des clefs, pour faciliter le démontage et l'extraction du noyau hors du bandage.

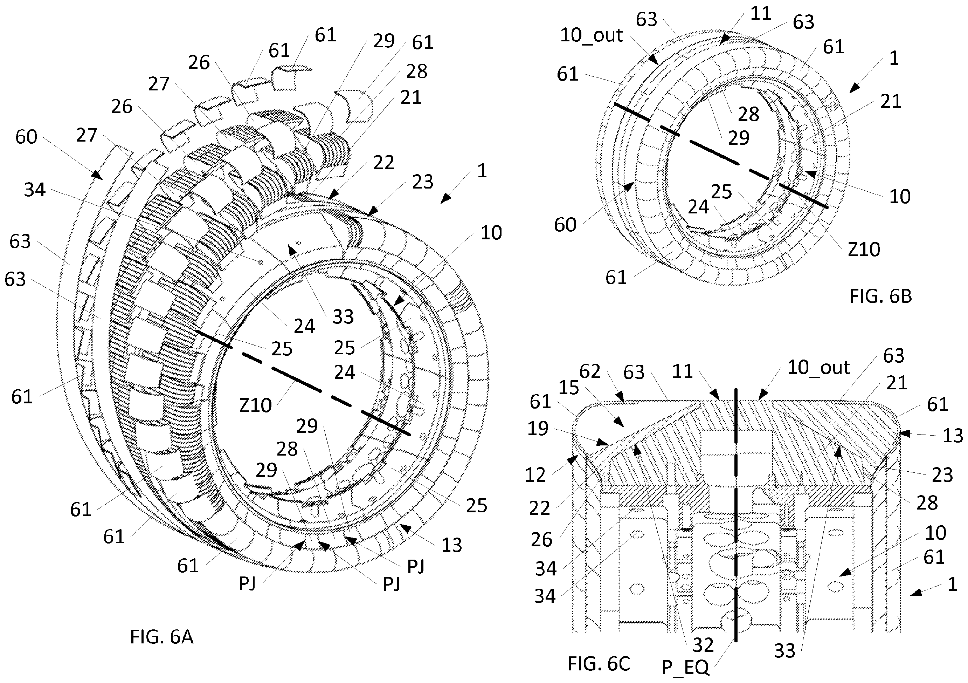

Les figures 6A, 6B et 6C illustrent, respectivement selon une vue en perspective partiellement éclatée, une vue en perspective assemblée, et une vue de détail en coupe dans un plan radial, une variante de l'outillage à rainures radiales des figures 4A à 4C pourvu d'un dispositif anti-pénétration destiné à faire obstacle à la pénétration des composants du bandage à base de caoutchouc dans les rainures, lequel dispositif anti-pénétration comprend à cet effet d'une part un premier jeu d'éléments de masquage formés par des coques sectorielles qui viennent recouvrir chacune un secteur d'oreille en épousant le galbe de l'épaule formant la transition entre la zone latérale et la zone sommitale de l'oreille, afin de masquer les rainures correspondantes, et d'autre part un second jeu d'éléments de masquage, comprenant des bandeaux annulaires qui viennent se placer à la transition entre chaque oreille et la couronne centrale afin de couvrir les rainures dans la zone sommitale. On notera que, par commodité de représentation, les moitiés gauche et droite de la figure 6C correspondent à des coupes selon deux plans radiaux distincts, légèrement décalés l'un par rapport à l'autre en azimut autour de l'axe central du noyau, de sorte que la moitié située ici à gauche du plan équatorial est coupée à travers la partie creuse d'une rainure, tandis que la moitié située à droite du plan équatoriale est coupée à travers la paroi latérale pleine qui délimite ladite rainure.

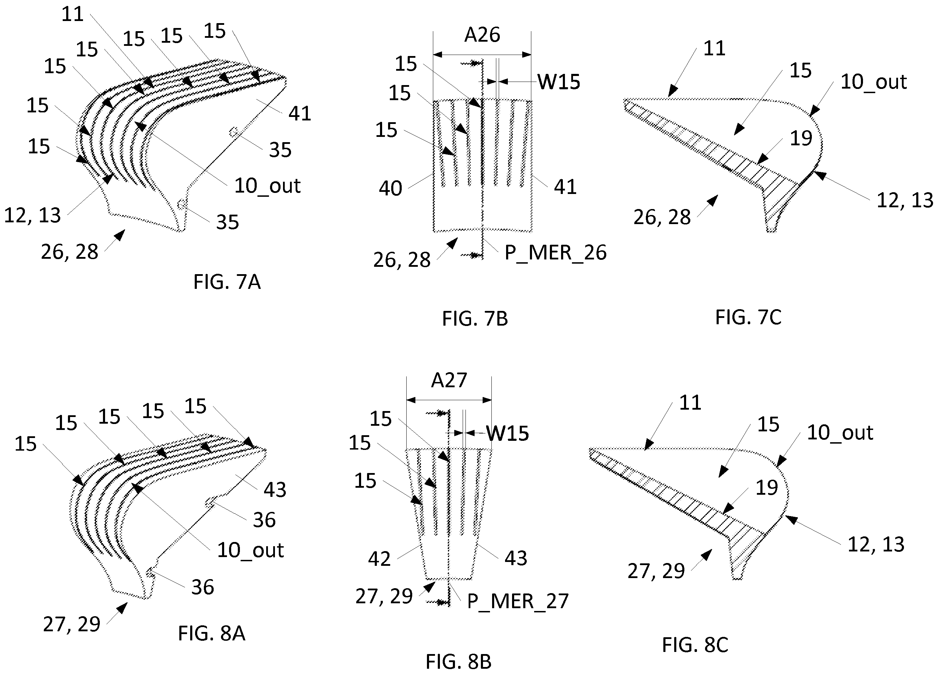

Les figures 7A, 7B, 7C illustrent un exemple de réalisation de clef d'oreille pourvue de rainures radiales et dont les plans de joint sont parallèles au plan méridien sagittal de l'oreille, c'est-à-dire au plan radial qui passe par le milieu du secteur correspondant, selon des vues respectivement en perspective, de face en projection dans un plan normal à l'axe central du noyau, et en coupe dans le plan méridien sagittal.
Les figures 8A, 8B et 8C illustrent un exemple de voûte d'oreille complémentaire à la clef d'oreille des figures 7A à 7C, selon des vues respectivement en perspective, de face en projection dans un plan normal à l'axe central du noyau, et en coupe dans un plan méridien sagittal de la voûte d'oreille, c'est-à-dire dans un plan radial qui passe par le milieu du secteur correspondant.

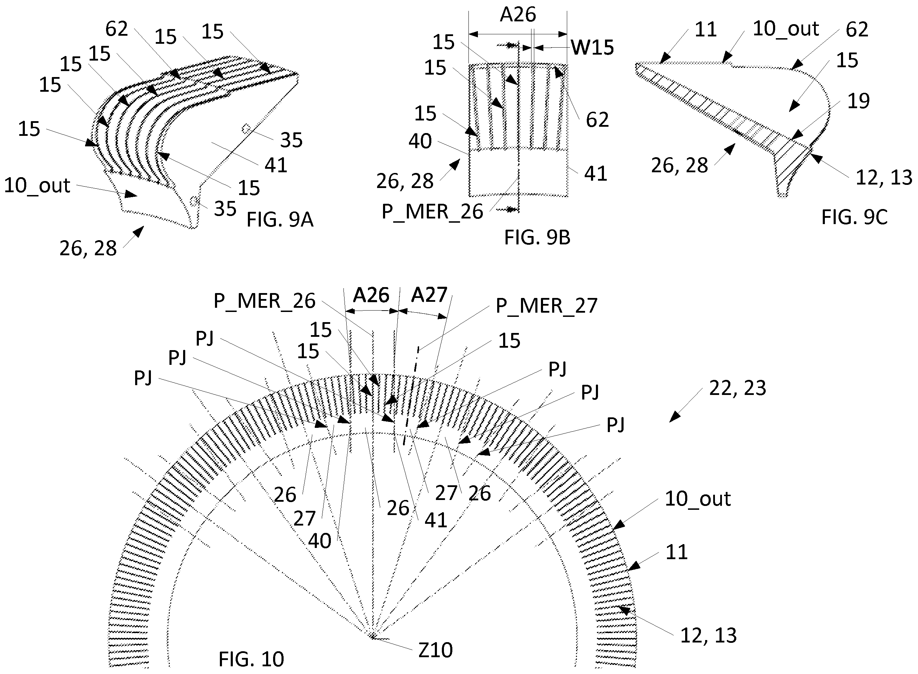

Les figures 9A, 9B et 9C illustrent, selon des vues respectivement en perspective, de face en projection dans un plan normal à l'axe central du noyau, et en coupe dans un plan méridien sagittal correspondant au plan radial qui passe par le milieu du secteur correspondant, une variante de la clef des figures 7A à 7C pourvue d'une empreinte destinée à accueillir et positionner une coque de masquage couvrant les rainures.
La figure 10 illustre, selon une vue partielle de face en projection dans un plan normal à l'axe central du noyau, une oreille annulaire résultant de l'assemblage des clefs d'oreille des figures 7A à 7C et des voûtes d'oreille des figures 8A à 8C.

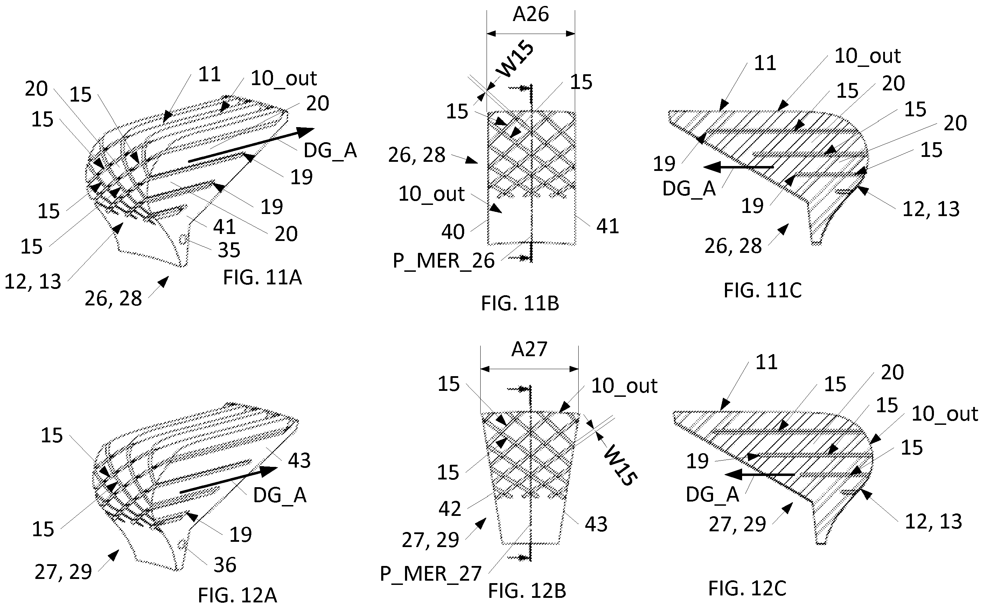

Les figures 11A, 11B et 11C illustrent, selon des vues respectivement en perspective, de face en projection dans un plan normal à l'axe central du noyau, et en coupe dans un plan méridien sagittal, une clef d'oreille possédant des rainures entrecroisées qui sont destinées à des haubans entrecroisés, lesdites rainures étant délimitées par des parois latérales qui sont générées selon une direction génératrice axiale, vectoriellement colinéaire à l'axe central, c'est-à-dire parallèle à l'axe central.
Les figures 12A, 12B et 12C illustrent, selon des vues respectivement en perspective, de face en projection dans un plan normal à l'axe central du noyau, et en coupe dans un plan méridien sagittal, une voûte d'oreille à rainures entrecroisées qui est complémentaire à la clef des figures 11A à 11C.

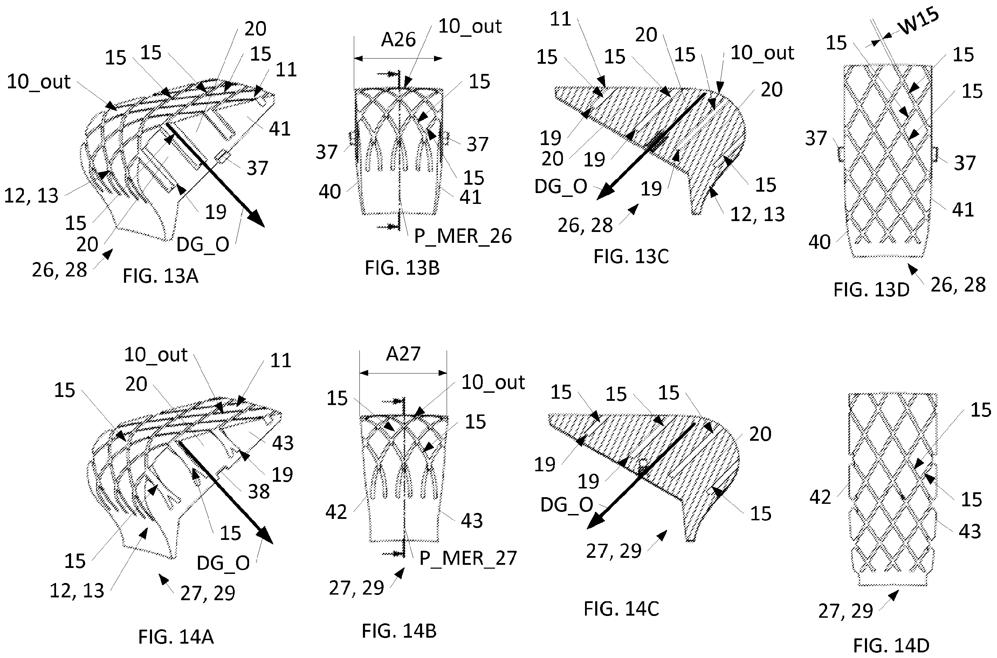

Les figures 13A, 13B, 13C et 13D illustrent une clef d'oreille possédant des rainures entrecroisées destinées à des haubans entrecroisés, rainures dont les parois latérales sont cette fois générées selon une direction génératrice oblique, ladite clef d'oreille étant représentée selon des vues respectivement en perspective, de face en projection dans un plan normal à l'axe central du noyau, en coupe dans un plan méridien sagittal du secteur concerné, et en projection depuis l'extérieur du noyau dans un plan normal à la direction génératrice oblique.
Les figures 14A, 14B, 14C et 14D illustrent, selon les mêmes vues que les figures 13A à 13D, une voûte d'oreille possédant des rainures entrecroisées délimitées par des parois générées selon une direction génératrice oblique, et qui est complémentaire de la clef des figures 13A à 13D.

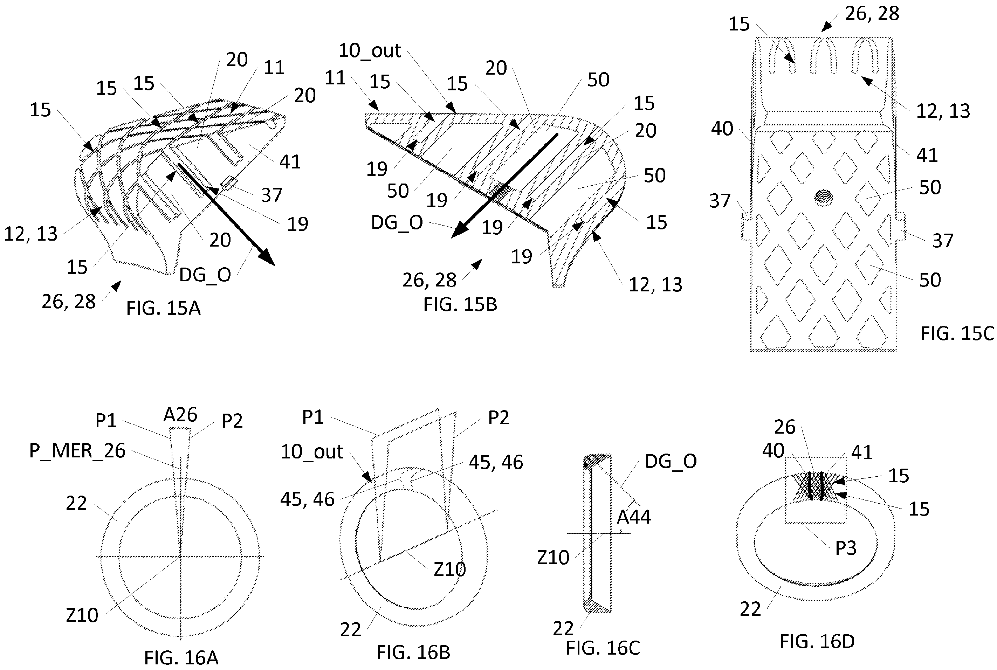

Les figures 15A, 15B, 15C illustrent, selon des vues respectivement en perspective, en coupe dans un plan méridien sagittal, et en projection radiale depuis l'intérieur du noyau, une variante de la clef d'oreille des figures 13A à 13D au sein de laquelle la face interne de ladite clef d'oreille est pourvue d'évidements qui s'étendent entre les parois pleines qui délimitent les rainures, afin d'alléger ladite clef d'oreille et d'en réduire l'inertie thermique.
Les figures 16A, 16B, 16C et 16D illustrent, selon des vues schématiques, un principe géométrique de génération de plans de joint applicables aux clefs d'oreille qui sont pourvues de rainures entrecroisées aux parois définies par une direction génératrice oblique, telle que les clefs d'oreille des figures 13A à 13D et 15A à 15C.

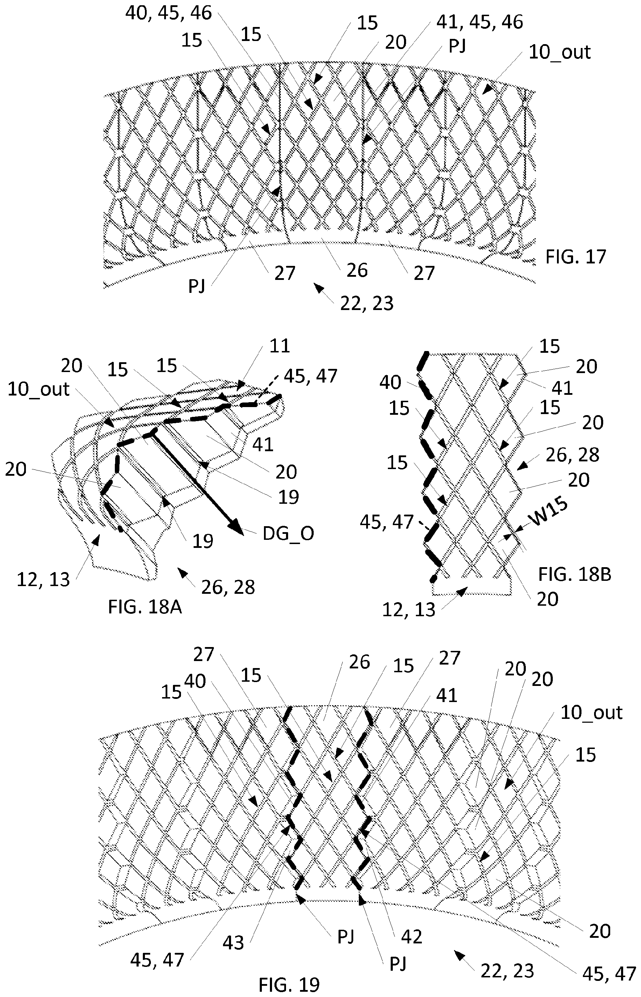

La figure 17 illustre, selon une vue partielle en perspective sous un angle de vue correspondant à la direction génératrice oblique, une oreille résultant de l'assemblage de clefs d'oreille et voûtes d'oreille dont les rainures et les plans de joint sont obtenus en suivant ladite direction génératrice oblique, tel que cela est le cas pour les secteurs d'oreille des figures 13A à 13D et 14A à 14D, ou 15A à 15C.
Les figures 18A et 18B illustrent, respectivement selon une vue en perspective et une vue en projection selon la direction génératrice des parois latérales des rainures entrecroisées, une variante de réalisation de clef d'oreille à rainures entrecroisées au sein de laquelle les plans de joints sont générés selon la direction génératrice oblique en suivant une découpe en zigzag à partir d'un profil de base qui correspond à une ligne brisée formée, sur la surface de réception, par l'alternance des côtés des quadrilatères que délimitent les rainures entrecroisées au niveau de la surface de réception, et qui se succèdent depuis la zone sommitale jusqu'à la zone latérale.
La figure 19 illustre, selon une vue partielle en perspective sous un angle de vue correspondant à la direction génératrice oblique, une oreille résultant de l'assemblage de clefs d'oreille et de voûtes d'oreille dont les plans de joint suivent une découpe en zigzag comme la clef d'oreille des figures 18A et 18B.

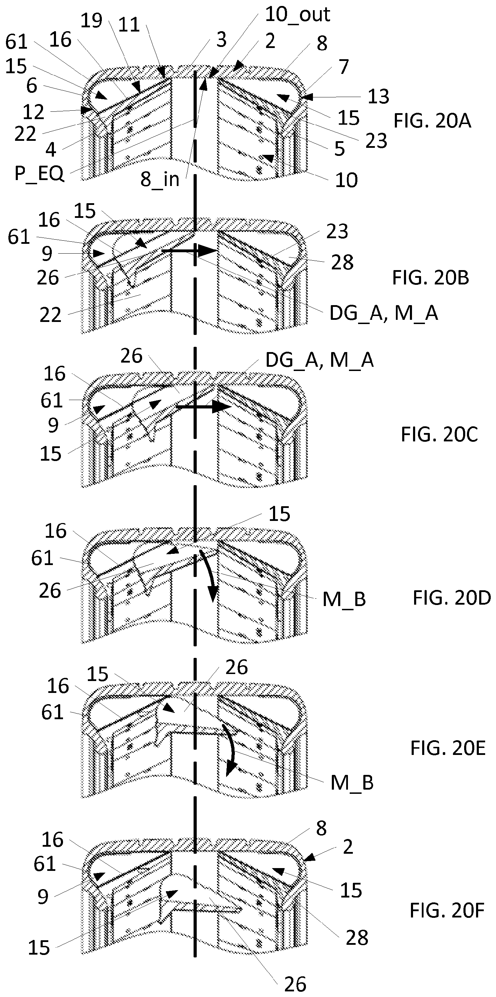

Les figures 20A, 20B, 20C, 20D, 20E et 20F illustrent, selon des vues en coupe dans un plan radial, l'extraction d'une clef d'oreille hors du bandage, par un mouvement d'extraction en translation axiale suivi d'un basculement en tangage, ici au sein d'un outillage à rainures radiales et à coques de masquage tel que représenté sur les figures 6A à 6C, équipé d'oreilles telles que représentées sur les figures 9A à 9C.

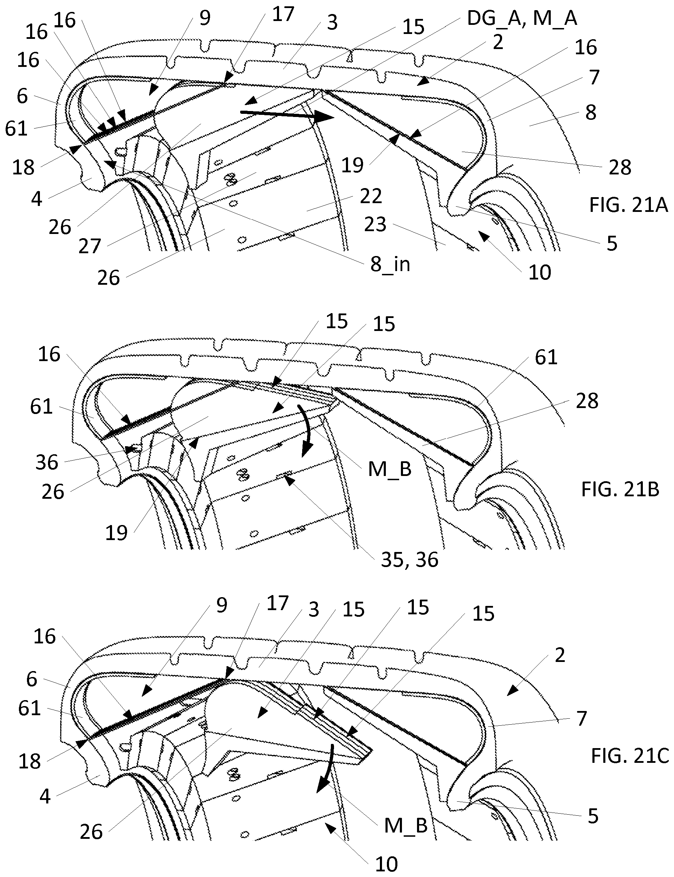

Les figures 21A, 21B, 21C illustrent, selon des vues partielles en perspective avec arrachement de matière dans un plan radial, l'extraction d'une clef d'oreille conformément au mouvement d'extraction illustré sur les figures 20A à 20F, et plus particulièrement conformément aux phases illustrées sur les figures 20C, 20D et 20E.

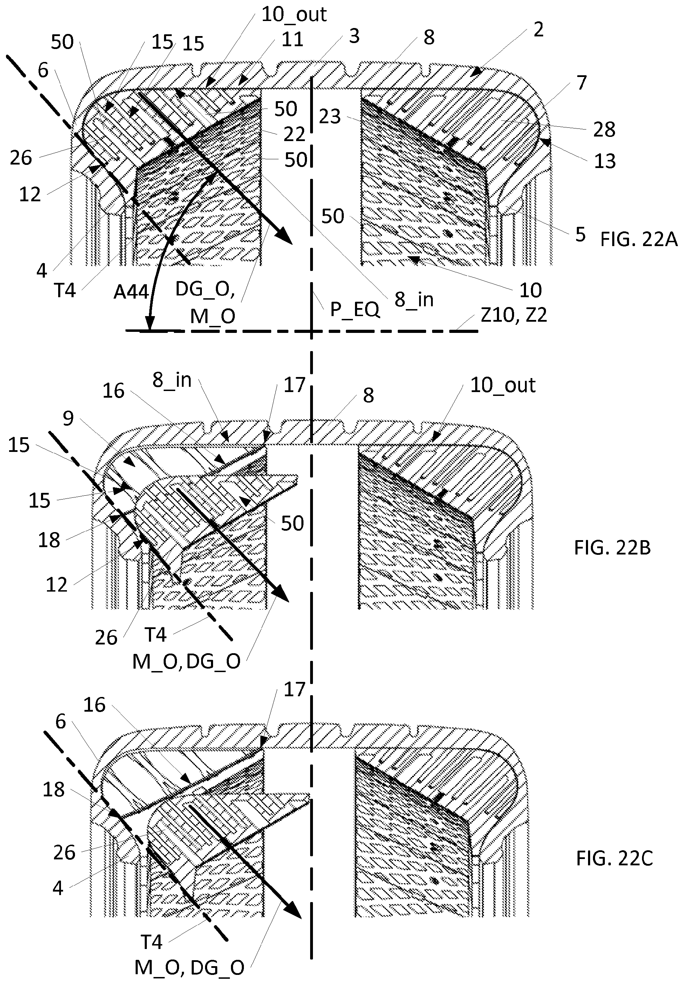

Les figures 22A, 22B et 22C illustrent, selon des vues en coupe dans un plan radial, l'extraction d'une clef d'oreille, ici du type illustré sur les figures 15A à 15C, selon un mouvement d'extraction oblique, porté par la direction génératrice oblique qui est contenue dans le plan méridien sagittal de la clef d'oreille et qui a été utilisée pour générer les parois latérales des rainures de ladite clef d'oreille.

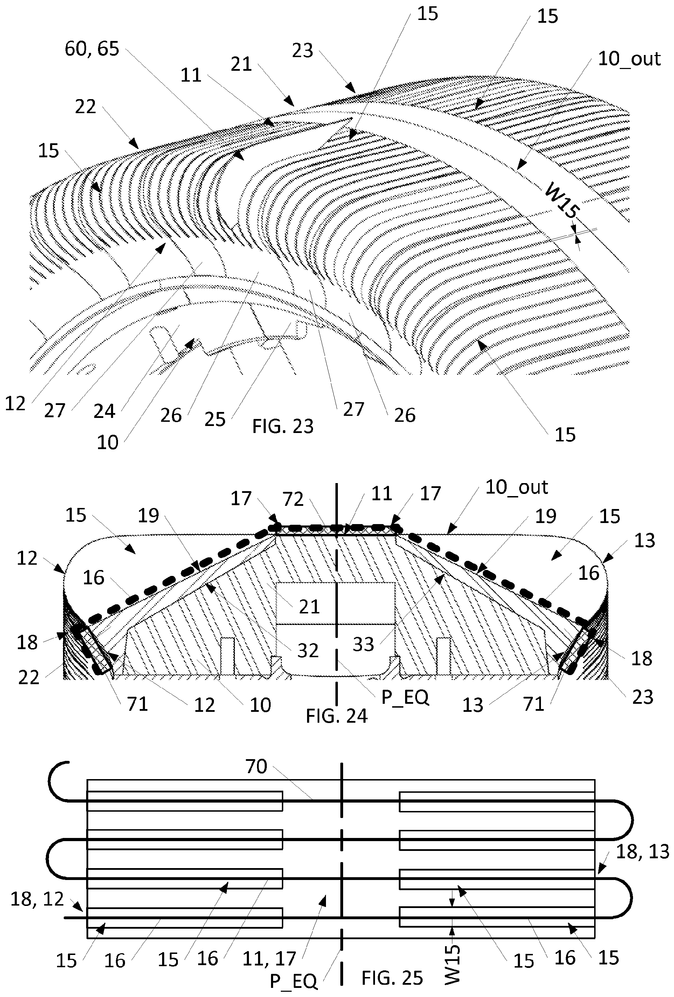

La figure 23 illustre, selon une vue partielle en perspective, une variante de réalisation selon laquelle le dispositif anti-pénétration utilise un jeu de cales qui sont insérées dans les rainures, après mise en place des haubans dans lesdites rainures, afin d'obturer lesdites rainures, ici de manière affleurante à la surface de réception.
La figure 24 illustre, selon une vue de détail en coupe dans un plan méridien passant par le milieu des rainures des oreilles d'un noyau selon les figures 4A à 4C, la mise en place des haubans au sein dudit noyau, avant la réalisation de la paroi du bandage.
La figure 25 illustre, selon une vue schématique, le principe de réalisation des haubans à partir d'un même fil continu engagé dans les passages successifs en formant un serpentin, et dont les boucles formant les extrema des alternances dudit serpentin sont destinées à former les points d'ancrage latéraux des haubans.

La présente invention concerne un outillage 1, tel qu'illustré notamment sur les figures 4A, 4B, 4C, 5A, 5B, 5C et 6A, 6B, 6C, lequel outillage 1 est destiné à la fabrication d'un bandage 2 toroïdal, tel qu'illustré sur les figures 1A, 1B, 2A et 2B.

Un tel bandage 2 constitue de préférence un bandage pneumatique destiné à équiper une roue d'un véhicule, pour assurer la liaison dudit véhicule avec le sol.

Le bandage 2 présente une forme de révolution autour d'un axe dit « axe central » Z2 qui correspond sensiblement, en pratique, à l'axe de rotation de la roue. Cet axe central Z2 définit trois directions classiquement utilisées par l'homme du métier : une direction axiale, une direction radiale, et une direction circonférentielle.

Par « direction axiale », on entend une direction vectoriellement colinéaire, c'est-à-dire parallèle à l'axe central Z2 du bandage 2, c'est-à-dire parallèle à l'axe de rotation du bandage.

Par « direction radiale », on entend une direction qui s'étend selon un rayon du bandage, c'est-à-dire une direction quelconque qui est sécante et perpendiculaire à l'axe central Z2.

Par « direction circonférentielle », on entend une direction qui est perpendiculaire à la fois à la direction axiale et à un rayon du bandage, et qui correspond donc, dans un plan normal à l'axe central Z2, à la tangente à un cercle dont le centre est sur l'axe de rotation du bandage.

Par « plan méridien » P_MER, ou « plan radial », on entend un plan parallèle à, et contenant, l'axe central Z2. Un tel plan méridien est donc normal à la direction circonférentielle.

Par « plan équatorial » P_EQ, on désigne le plan normal à l'axe central Z2 et qui passe par le point radialement le plus externe du bandage, lequel est de préférence situé axialement à mi-distance entre les points axialement les plus externes du bandage. Ledit plan équatorial divise donc axialement le bandage 2 en deux moitiés toroïdales, de préférence sensiblement égales, dites, par analogie avec le globe terrestre, « hémisphères ».

Ledit bandage 2 comprend, de façon connue en soi, un sommet 3 destiné à former une bande de roulement, un premier bourrelet 4 annulaire et un second bourrelet 5 annulaire conçus pour permettre l'accrochage du bandage 2 sur un support de montage tel qu'une jante, ainsi qu'un premier flanc 6 et un second flanc 7 qui relient le sommet 3 respectivement au premier bourrelet 4 et au second bourrelet 5.

Par simple convention, on pourra considérer que, dans un plan méridien P_MER, la limite entre le sommet 3 et le flanc 6, 7 considéré correspond au point axialement le plus extérieur de la surface externe du bandage 2 pour lequel l'angle entre la tangente à la surface externe du bandage 2 et une droite parallèle à l'axe central Z2 est égal à 30 degrés.

Le sommet 3, les premier et second flancs 6, 7 et les premier et second bourrelets 4, 5 forment dans leur ensemble une paroi 8 présentant une surface interne 8_in concave qui délimite une cavité 9 du bandage 2.

En pratique, ladite cavité 9 du bandage est torique, et forme avantageusement la cavité de gonflage du bandage 2, qui est destinée à recevoir un fluide sous pression, tel que de l'air, pour soutenir le sommet 3 du bandage 2 pneumatique par rapport à la jante.

De préférence, tel que cela est bien visible sur les figures 1A et 2A, le bourrelet 4, 5 est situé axialement en retrait de la portion axialement la plus saillante du flanc 6, 7 correspondant, c'est-à-dire que ledit bourrelet 4, 5 est plus proche du plan équatorial P_EQ que le flanc 6, 7 auquel ledit bourrelet est raccordé. Ainsi, entre le sommet 3 et le bourrelet 4, 5, le flanc 6, 7 forme, en section dans un plan méridien P_MER, un profil globalement bombé vers l'extérieur et dont l'extrémité formant le bourrelet 4, 5 est axialement rentrante, de sorte que la cavité 9 présente, en section dans ledit plan méridien, sensiblement une forme de Ω (Oméga majuscule).

Selon l'invention, l'outillage 1 comprend un noyau 10 toroïdal présentant, autour de son axe central Z10, une surface externe 10_out convexe, dite « surface de réception » 10_out, qui possède une forme conjuguée à la surface interne 8_in de la paroi 8 du bandage et qui comprend à cet effet une zone sommitale 11, radialement externe, destinée à recevoir des composants constitutifs du sommet 3 du bandage 2, et, de part et d'autre axialement de ladite zone sommitale, une première zone latérale 12 rabattue vers l'axe central Z10 du noyau et destinée à recevoir des composants constitutifs du premier flanc 6 et du premier bourrelet 4 ainsi qu'une seconde zone latérale 13 rabattue vers l'axe central Z10 du noyau et destinée à recevoir des composants constitutifs du second flanc 7 et du second bourrelet 5.

De la sorte, le noyau 10 matérialise un volume, dit « volume réservé », qui est délimité extérieurement par la surface de réception 10_out et qui correspond à la cavité 9 du bandage 2.

Le noyau 10 peut ainsi occuper, et donc réserver temporairement, pendant la fabrication du bandage, le volume dont la forme et les dimensions correspondent à celles de la cavité 9, volume qui deviendra la cavité 9 du bandage 2 lorsque le noyau 10 aura été retiré dudit bandage 2, lors de l'opération de démoulage qui terminera le cycle de fabrication du bandage 2.

On notera que, en pratique, l'axe central Z10 du noyau 10, autour duquel ledit noyau 10 forme un anneau, se confondra en pratique avec l'axe central Z2 du bandage 2 fabriqué sur ledit noyau 10. Par commodité de description, on pourra donc désigner indifféremment l'un ou l'autre par l'expression « axe central ».

Selon l'invention, le noyau 10 possède une pluralité de passages 15 qui s'étendent à l'intérieur du volume réservé, sous la surface de réception 10_out, et qui s'ouvrent sur ladite surface de réception 10_out de manière que chacun desdits passages 15 relie la zone sommitale 11 de la surface de réception 10_out à l'une des première et seconde zones latérales 12, 13 afin que le noyau 10 puisse recevoir, à l'intérieur desdits passages 15, des éléments de renfort 16, dits « haubans » 16, qui sont conçus pour intégrer à demeure la structure du bandage 2 et s'étendre chacun dans la cavité 9 du bandage en reliant un point d'ancrage sommital 17 situé dans le sommet 3 du bandage 2 à un point d'ancrage latéral 18 situé dans l'un des flancs 6, 7 ou des bourrelets 4, 5 du bandage 2.

Les passages 15 correspondent ainsi à des espaces vides qui sont ménagés dans le noyau 10, à l'intérieur du volume réservé, pour pouvoir accueillir les haubans 16, et permettre ainsi à chaque hauban 16 de traverser la surface de réception 10_out, une première fois pour pénétrer dans le volume réservé, ici à travers la zone latérale 12, 13, et une seconde fois pour ressortir du volume réservé, ici dans la zone sommitale 11, ou inversement.

Les haubans 16 pourront présenter différentes configurations, et notamment une variété d'orientations, sans sortir du cadre de l'invention.

Ainsi, selon une possibilité de réalisation correspondant aux figures 1A et 1B, les points d'ancrage sommital 17 et latéral 18 de chaque hauban 16 sont situés à un même azimut autour de l'axe central Z2 du bandage, de sorte que les haubans 16 s'étendent suivant des plans radiaux contenant l'axe central Z2 du bandage.

Selon une autre possibilité de réalisation correspondant aux figures 2A et 2B, les points d'ancrage sommital 17 et latéral 18 de chaque hauban 16 sont décalés angulairement en azimut l'un par rapport à l'autre autour de l'axe central Z2 du bandage, de sorte à créer des haubans 16 inclinés. Plus préférentiellement, le bandage 2 pourra alors comporter, dans un même hémisphère, et de préférence dans chacun de ses deux hémisphères, deux jeux de haubans 16, de sorte que les haubans 16 du premier jeu présentent chacun un décalage angulaire dans un premier sens, par exemple dans le sens horaire, entre leur point d'ancrage sommital 17 et leur point d'ancrage latéral 18, tandis que les haubans 16 du second jeu présentent chacun un décalage angulaire dans un second sens opposé, par exemple anti-horaire, entre leur point d'ancrage sommital 17 et leur point d'ancrage latéral 18, de sorte que les haubans 16 du premier jeu et les haubans 16 du second jeu, d'un même hémisphère, s'entrecroisent.

De préférence, tous les points d'ancrage latéraux 18 des haubans 16 d'un même hémisphère se situent à une même abscisse selon l'axe central Z2, c'est-à-dire que les haubans 16 d'un même hémisphère émergent de préférence de la paroi 8 du bandage 2 selon une même ligne fictive qui correspond à l'intersection de la surface interne 8_in de la paroi 8 avec un plan normal à l'axe central Z2.

Il en va de même, *mutatis mutandis,* pour les points d'ancrage sommitaux 17 desdits haubans 16 d'un même hémisphère, qui se situent de préférence tous à une même abscisse le long de l'axe central Z2, de préférence distincte de l'abscisse des points d'ancrage latéraux 18.

En outre, pour un hauban 16 donné, voire pour tous les haubans 16, l'abscisse du point d'ancrage sommital 17 est de préférence plus proche du plan équatorial P_EQ que l'abscisse du point d'ancrage latéral 18.

Dans tous les cas, c'est-à-dire que l'on soit en présence de haubans 16 portés par des plans radiaux comme sur la figure 1A ou en présence de haubans 16 inclinés et/ou entrecroisés comme sur la figure 2A, chaque hauban 16 est de préférence contenu dans un seul hémisphère, en ceci qu'aucun hauban 16 ne traverse le plan équatorial P_EQ à l'intérieur de la cavité 9 du bandage, c'est-à-dire que le point d'ancrage latéral 18 et le point d'ancrage sommital 17 qui forment les deux extrémités d'un même tronçon de hauban 16 qui s'étend continûment à l'intérieur de la cavité 9, et donc qui forment les deux points successifs par lesquels respectivement le hauban 16 émerge de la paroi 8 pour traverser la cavité 9 puis quitte la cavité 9 pour replonger dans la paroi 8, sont situé tous les deux dans le même hémisphère, d'un même côté du plan équatorial P_EQ. Ceci permet notamment de simplifier la structure de l'outillage 1 et les opérations de démoulage.

De préférence, que l'on soit en présence de haubans 16 portés par des plans radiaux comme sur la figure 1A ou en présence de haubans 16 inclinés et/ou entrecroisés comme sur la figure 2A, chaque hauban 16 est destiné à travailler en traction, et donc à relier le point d'ancrage sommital 17 au point d'ancrage latéral 18 correspondant selon un segment de droite, c'est-à-dire en formant géométriquement une corde tendue, ou quasi-tendue, sous l'arc qui est formé par la surface interne 8_in de la paroi 8 entre le point d'ancrage sommital 17 et le point d'ancrage latéral 18 dans le bandage 2 au repos, et ce afin que le hauban 16 s'oppose à l'éloignement mutuel desdits points d'ancrage 17, 18 l'un par rapport à l'autre, et ainsi augmente la rigidité latérale du bandage.

Par ailleurs, les haubans 16 d'un même jeu de haubans seront de préférence répartis en azimut autour de l'axe central Z2 de manière uniforme, selon un pas angulaire de répétition P16 constant.

Ce pas angulaire de répétition P16 sera de préférence compris entre 0,5 degré et 5 degrés, de préférence entre 0,75 degré et 3 degrés, notamment entre 1 degré et 3 degrés, et par exemple égal à 1,5 degré. Chaque jeu de haubans 16 pourra ainsi compter entre 72 haubans et 480 voire 720 haubans, de préférence entre 120 haubans et 360 haubans, et par exemple préféré 240 haubans.

Ces valeurs de pas angulaire de répétition P16 seront notamment retenues pour des bandages 2 destinés à des véhicules dits « de tourisme » tels que définis au sens de la norme 2020 de l'organisation européenne de normalisation instituée par les professionnels du pneumatique et baptisée « European Tyre and Rim Technical Organisation » ou « ETRTO », et en particulier pour des bandages destinés à être montés sur une jante dont le diamètre de montage est au moins égal à 12 pouces, de préférence au moins égal à 16 pouces et au plus égal à 24 pouces, de préférence au plus égal à 22 pouces.

En pratique, le pas angulaire de répétition P16 ci-dessus permet d'obtenir un bon compromis entre un nombre de haubans 16 qui est d'une part suffisamment élevé pour obtenir une rigidification efficace du bandage 2, même en cas de rupture d'un ou de quelques haubans 16, et d'autre part suffisamment modéré pour pouvoir aménager un nombre correspondant de passages 15 dans le noyau 10 sans fragiliser excessivement la structure du noyau 10 ou compliquer les opérations de démoulage.

A titre indicatif, pour les diamètres de bandage 2 susmentionnés, un pas de répétition P16 de 1,5 degré positionnera un hauban 16, et donc un passage 15 de hauban, tous les 5 mm à 10 mm, et par exemple environ tous les 8 mm, de longueur d'arc considéré autour de l'axe central Z2, Z10, au diamètre maximal de la surface interne 8_in de la paroi 8 du bandage 2, ou, de manière équivalente, dans la zone sommitale 11, au diamètre maximal de la surface externe du noyau 10 formant la surface de réception 10_out.

De préférence, les haubans 16 seront réalisés à partir d'un ou plusieurs éléments filaires, dont la plus grande dimension transverse sera au moins dix fois, au moins vingt fois, voire au moins cinquante fois inférieure à la longueur apparente de la portion du hauban 16 concerné qui s'étend dans la cavité 9, c'est-à-dire de la longueur du hauban 16 comprise entre le point d'ancrage sommital 17 et le point d'ancrage latéral 18 correspondant.

Lesdits haubans 16 pourront ainsi être formés dans un fil monobrin ou multibrin, réalisé à partir de brins en matériau textile, en matériau polymère tel que l'aramide, voire en matériau métallique. Selon une possibilité de réalisation, les haubans 16 seront réalisés dans un fil composite réalisé à partir de fibre de verre et de résine.

Avantageusement, quelle que soit la configuration des haubans 16, le noyau 10 selon l'invention permet d'implanter lesdits haubans 16 dans le volume réservé par le noyau 10, et donc dans l'espace qui deviendra la cavité 9 du bandage 2, préalablement à la constitution du bandage 2, selon une répartition et un agencement qui correspondront sensiblement voire exactement à la répartition et à l'agencement que présenteront lesdits haubans au sein du bandage 2 fini, prêt à être monté sur la jante, puisque les haubans 16 restent en place à l'intérieur de la cavité 9, dans la position voulue, et solidaires du bandage 2, lorsque l'on retire le noyau 10. Grâce à l'utilisation d'un noyau 10 selon l'invention, on est donc assuré que le bandage 2 présentera une configuration bien maîtrisée, et reproductible d'un bandage 2 à l'autre.

En outre, les haubans 16 se trouvant ainsi à l'abri dans les passages 15 du noyau 10 pendant la pose des composants constitutifs de la paroi 8 du bandage, il n'y a aucun risque de déplacer, d'arracher ou d'endommager accidentellement lesdits haubans 16 pendant le processus de fabrication de la paroi 8 du bandage 2.

Dans l'absolu, on pourrait envisager que tout ou partie du noyau 10, et en particulier les portions du noyau 10 qui remplissent provisoirement la cavité 9 du bandage et qui délimitent les passages 15, soient réalisées dans un matériau soluble, fusible, vaporisable (sublimable) ou autrement désagrégeable sans dommage pour le bandage 2, de sorte que lesdites portions du noyau puissent être détruites sur commande après fabrication et cuisson du bandage 2, et évacuées sous une forme fluide ou granulaire de fine granulométrie lors du démoulage, sans endommager le bandage 2 ni en particulier les haubans 16. Ainsi, on pourrait utiliser un noyau 10 formant, par analogie avec la fonderie, un modèle partiellement ou totalement perdu, renouvelé à chaque cycle de fabrication, afin notamment de faciliter le démoulage. Au sein d'un tel noyau formant un modèle partiellement ou totalement perdu, les passages 15 pourraient éventuellement présenter une forme tubulaire, dont la section transverse serait fermée autour du hauban 16 au moins sur une portion de la longueur libre dudit hauban, voire sur toute ladite longueur libre dudit hauban 16, c'est-à-dire depuis le point d'ancrage latéral 18 jusqu'au point d'ancrage sommital 17.

Toutefois, de façon particulièrement préférentielle, on choisira d'aménager les passages 15 selon des formes ouvertes démoulables, permettant la réalisation d'un noyau 10 permanent, réutilisable, que l'on peut extraire hors du bandage 2, après fabrication dudit bandage 2, sans dommage pour les haubans 16, puis réutiliser pour fabriquer le bandage suivant.

A ce titre, les passages 15 pour haubans 16 seront de préférence formés par des rainures 15 qui sont creusées depuis la surface de réception 10_out dans l'épaisseur du volume réservé de sorte à présenter une ouverture continue le long du profil de la surface de réception 10_out, depuis la zone sommitale 11 jusqu'à la zone latérale 12, 13 concernée.

Avantageusement, puisque chaque rainure 15 crée, au niveau de la surface de réception 10_out, une ouverture de type fente qui s'étend sur toute la longueur de la surface de réception 10_out allant du point d'ancrage latéral 18 du hauban 16 concerné jusqu'au point d'ancrage sommital 17 dudit hauban 16, il est possible d'engager le hauban 16 dans le passage, avant la pose des composants constitutifs de la paroi 8 du bandage 2, simplement en glissant ledit hauban 16 dans la rainure 15, depuis l'extérieur du noyau 10, de sorte que le hauban traverse la surface de réception 10_out pour s'enfoncer dans le volume réservé, en direction de l'axe central Z10 du noyau.

Avantageusement, après que l'on aura posé sur la surface de réception 10_out les composants constitutifs de la paroi 8 du bandage 2, de sorte que la paroi 8 couvrira les rainures 15, il sera possible d'extraire le noyau 10 par l'intérieur du bandage 2, en faisant ainsi progressivement sortir les haubans 16, désormais fixés à la paroi 8 et donc intégrés au bandage 2, à travers les ouvertures des rainures 15 du noyau que l'on dégage, et en laissant ainsi les haubans 16 à leur place définitive dans la cavité 9 du bandage 2.

Par commodité de description, et pour ne pas surcharger les figures, on désignera par la même référence « 15 » les passages 15 pour haubans 16 et les rainures 15 qui constituent une forme spécifique préférée desdits passages 15 pour haubans 16.

De préférence, tel que cela est notamment visible sur les figures 4C, 5C, 6C, 7C, 8C, 9C, 11C, 12C, 13C, 14C, 15B, 18A, 20A, 21A et 24, les rainures 15 sont borgnes, c'est-à-dire que lesdites rainures 15 présentent un fond 19 plein, situé sous la surface de réception 10_out, dans le volume réservé, fond 19 plein qui s'étend depuis une première embouchure de la rainure 15, qui s'ouvre sur la zone latérale 12, 13 de ladite surface de réception 10_out, jusqu'à une seconde embouchure de la rainure 15, qui s'ouvre sur la zone sommitale 11 de ladite surface de réception 10_out.

Ainsi, lorsqu'il est en place dans la rainure 15, le hauban 16 se situe radialement, et plus particulièrement est contenu radialement, par rapport à l'axe central Z10 du noyau, entre le fond 19 et l'ouverture de la rainure 15 située sur la surface de réception 10_out. Le hauban 16 peut être soit décollé "au-dessus" du fond 19 c'est-à-dire situé à une distance radiale non nulle dudit fond 19, au-delà du fond 19 par rapport à l'axe central Z10, soit reposer en appui sur ledit fond 19, qui servira alors avantageusement de guide et de support audit hauban 16 pendant la fabrication du bandage 2.

De préférence, la profondeur des passages 15, et plus particulièrement la profondeur des rainures 15, par rapport à la surface de réception 10_out, et donc plus particulièrement la distance qui sépare le fond 19 de la rainure 15 de la surface de réception 10_out, est suffisante pour que chacun desdits passages 15 puisse permettre au hauban 16 de suivre, au sein dudit passage 15, un tracé qui relie de façon directe le point d'ancrage latéral 18 au point d'ancrage sommital 17 selon un segment de droite. Ainsi, le hauban 16 pourra adopter au sein du passage 15, ici au sein de la rainure 15, sa configuration fonctionnelle, sans interférer ni être déformé ou dévié par ledit passage 15, configuration fonctionnelle selon laquelle ledit hauban 16 forme une corde qui relie par le plus court chemin les extrémités de l'arc que dessine la paroi 8 du bandage entre le point d'ancrage latéral 18 et le point d'ancrage sommital 17, de sorte que ledit hauban 16 pourra, une fois le bandage 2 libéré du noyau 10, travailler efficacement en traction, à la manière d'un tirant, entre le point d'ancrage latéral 18 et le point d'ancrage sommital 17.

Les passages 15, ici les rainures 15, seront bien entendu répartis, de préférence équirépartis, en azimut autour de l'axe central Z10 selon le pas angulaire de répétition P16 souhaité pour les haubans 16, tel que décrit plus haut, et par exemple selon un pas angulaire de répétition P16 constant et égal à 1,5 degré.

La largeur W15 de la rainure 15 sera de préférence choisie en fonction d'un compromis entre i) en tenant compte de la largeur (diamètre) du hauban 16, la nécessité d'assurer un jeu fonctionnel entre le hauban 16 et les parois latérales qui délimitent la rainure 15, jeu fonctionnel qui soit suffisant pour permettre l'insertion du hauban 16 dans la rainure 15, puis l'extraction du noyau 10 hors du bandage 2, et donc l'extraction du hauban 16 hors de la rainure 15 sans coincement et sans dommage pour le hauban 16, et ii) le maintien d'une ouverture et d'une largeur de rainure W15 qui soit suffisamment étroite pour ne pas fragiliser le noyau 10 et pour assurer un support de bonne qualité aux composants du bandage 2 posés sur la surface de réception 10_out, et limiter si possible la pénétration, et donc la déformation ou le fluage, des matériaux constitutifs desdits composants du bandage 2 dans les rainures 15.

A ce titre, la largeur W15 de la rainure 15, et en particulier la largeur de l'ouverture de la rainure 15 à la surface de réception 10_out, sera de préférence comprise entre 1,01 fois et 1,5 fois la dimension correspondante de la section transverse dudit hauban 16, et plus préférentiellement la plus grande dimension de la section transverse du hauban. En pratique, si le hauban est formé par un fil, monobrin ou multibrin, de section sensiblement circulaire, alors la dimension considérée de la section transverse du hauban sera le diamètre de la section circulaire du fil.

De préférence, pour les mêmes raisons, et notamment si l'on envisage des haubans 16 dont la section présente un diamètre compris entre 0,25 mm et 2 mm, par exemple de l'ordre de 1 mm, on choisira une largeur de rainure W15 comprise, en particulier au niveau de l'ouverture à la surface de réception 10_out, entre 0,1 mm et 3 mm, de préférence entre 0,3 mm et 2,2 mm, et par exemple entre 1 mm et 1,8 mm.

De préférence, toutes les rainures 15 d'un même hémisphère du noyau 10, et plus préférentiellement toutes les rainures 15 du noyau 10, présenteront une largeur W15 identique.

Selon un possible mode de réalisation, les rainures 15 sont générées suivant des plans radiaux contenant l'axe central Z10, tel que cela est le cas sur les figures 4A à 4C, 6A à 6C, 7A à 7C, 8A à 8C, 9A à 9C, 10, 20A à 20F, 21A à 21C et 23 de sorte à permettre la mise en place au sein du bandage 2 de haubans 16 s'étendant selon lesdits plans radiaux, comme c'est le cas du bandage des figures 1A et 1B.

Chaque rainure 15 est ainsi portée par un plan radial qui forme le plan méridien sagittal de ladite rainure 15, c'est-à-dire qui coupe le secteur angulaire azimutal occupé par ladite rainure en son milieu. Les plans méridiens sagittaux de chacune des deux rainures 15 immédiatement voisines de la rainure 15 considérée sont distants angulairement du plan méridien sagittal de ladite rainure 15 considérée d'une valeur égale au pas angulaire de répétition P16 des rainures 15, et donc, *in fine,* égale au pas angulaire de répétition P16 des haubans.

Le cas échéant, chaque rainure 15 selon cet agencement pourra être générée par un trait de scie centré sur et parallèle au plan méridien sagittal de ladite rainure, et de largeur constante égale à la largeur W15 souhaitée pour la rainure 15.

Selon un autre possible mode de réalisation, les rainures 15 s'entrecroisent de sorte à dessiner un quadrillage sur la surface de réception 10_out, tel que cela est les cas sur les figures 5A à 5C, 11A à 11C, 12A à 12C, 13A à 13D, 14A à 14D, 15A à 15C, 17, 18A et 18B, 19, et 22A à 22C, afin de permettre la mise en place de haubans 16 croisés au sein du bandage 2, comme c'est le cas du bandage 2 des figures 2A et 2B.

Par analogie et par commodité de description, et bien que la surface de réception 10_out forme une surface non développable (surface gauche) et donc à plus forte raison une surface non plane, on pourra désigner par « quadrilatères » les motifs du quadrillage, c'est-à-dire les motifs de base ou « pavés », ici sensiblement rhombiques (c'est-à-dire sensiblement en forme de losanges), que dessinent les ouvertures des rainures 15 entrecroisées sur la surface de réception 10_out, et par « prismes » 20 les colonnes de matière du noyau 10 qui subsistent entre les rainures 15 entrecroisées consécutives, prismes 20 dont la base correspond aux quadrilatères susmentionnés, et dont les faces forment les parois latérales qui délimitent lesdites rainures 15.

Selon une caractéristique préférentielle qui peut s'appliquer quelle que soit la nature et la forme des passages 15 pour haubans, mais qui est plus particulièrement intéressante dans les cas où lesdits passages 15 pour haubans sont formés par des rainures 15, le noyau 10 comprend, tel que cela est notamment visible sur les figures 4A, 4C, 5A, 5C, 6A et 6C et 23, un assemblage de plusieurs sous-ensembles 21, 22, 23 annulaires comportant : i) un premier sous-ensemble 21 annulaire dit « couronne centrale » 21, qui forme une portion centrale de la zone sommitale 11 de la surface de réception 10_out, portion centrale de la zone sommitale 11 qui est destinée à recevoir un ou des composants constitutifs du sommet 3 du bandage 2, ii) un second sous-ensemble 22 annulaire dit « oreille gauche » 22, qui est accolé axialement à la couronne centrale 21, ladite oreille gauche 22 comprenant la première zone latérale 12 de la surface de réception 10_out ainsi qu'une portion de la zone sommitale 11 qui prolonge axialement la portion centrale de la zone sommitale 11 du côté correspondant de la couronne centrale 21, et ladite oreille gauche 22 contenant les rainures 15 formant les passages destinés aux haubans 16 qui relient le premier flanc 6 du bandage au sommet 3 du bandage, et iii) un troisième sous-ensemble 23 annulaire dit « oreille droite » 23 qui est accolé axialement à la couronne centrale 21, du côté de la couronne centrale 21 qui est axialement opposé au côté recevant l'oreille gauche 22, ladite oreille droite 23 comprenant la seconde zone latérale 13 de la surface de réception 10_out ainsi qu'une portion de la zone sommitale 11 qui prolonge axialement la portion centrale de la zone sommitale 11 du côté correspondant de la couronne centrale 21, et ladite oreille droite 23 contenant les rainures 15 formant les passages destinés aux haubans 16 qui relient le second flanc 7 du bandage au sommet 3 du bandage.

L'oreille gauche 22, la couronne centrale 21, et l'oreille droite 23 sont coaxiales, et centrées sur l'axe central Z10.

Les termes « gauche » et « droite » sont utilisés par commodité de description, à seule fin d'opérer une distinction entre les oreilles 22, 23 lorsque nécessaire, et ne préjugent bien entendu aucunement du sens de montage du bandage 2 sur la jante et/ou le véhicule.

De préférence, la couronne centrale 21 est dépourvue de passages 15 pour haubans 16, et peut ainsi préférentiellement présenter une surface externe pleine, qui forme un ilot central annulaire séparant les rainures 15 respectives de l'oreille gauche 22 et de l'oreille droite 23. Avantageusement, un tel agencement facilitera le démoulage, et permettra en outre de faire passer localement les haubans 16 sur l'extérieur de la couronne centrale 21, et donc du côté radialement externe du noyau 10, sur la surface de réception 10_out qui recevra les composants de la paroi 8 du bandage, ce qui permettra d'intégrer facilement la portion correspondante des haubans 16 dans la paroi 8 et donc d'assurer l'ancrage desdits haubans dans le sommet 3 du bandage 2.

De préférence, la portion sommitale de la couronne centrale 21 forme un cylindre droit, de base circulaire, centré sur l'axe central Z10.

En outre, de préférence, le plan équatorial P_EQ est contenu dans la plage axiale couverte par la portion centrale de la zone sommitale 11 de la couronne centrale 21, et plus particulièrement est situé au milieu de ladite plage axiale, de sorte à subdiviser la portion centrale de la zone sommitale 11, et plus globalement la couronne centrale 21, en deux parties qui sont égales, voire symétriques l'une de l'autre, par rapport audit plan équatorial P_EQ.

Les oreilles 22, 23 présentent quant à elles, en section dans un plan radial, un profil extérieur bombé, convexe, qui assure une transition incurvée entre la zone sommitale 11 et la zone latérale 12, 13 correspondante de la surface de réception 10_out, et dont la courbure épouse la courbure du creux de la cavité 9 du bandage 2, et plus particulièrement la courbure de la surface interne 8_in de la paroi 8 du bandage à la transition entre le sommet 3 et le flanc 6, 7, ainsi que dans les zones où la paroi 8 dessine les points axialement les plus externes des flancs 6, 7. De la sorte, l'oreille 22, 23 forme un lobe qui peut occuper, remplir provisoirement et donc conformer, le creux de la cavité 9 du bandage 2, pendant la fabrication dudit bandage 2.

On notera à ce titre que, en raison de la concavité de la cavité 9 et du resserrement axial que forment les bourrelets 4, 5 par rapport aux flancs 6, 7, lesdits bourrelets 4, 5 se trouvent radialement au droit des oreilles 22, 23, si bien que les oreilles 22, 23 forment des portions du noyau 10 qui ne peuvent pas être démoulées selon un mouvement d'extraction strictement radial.

Comme il a été indiqué plus haut, on pourrait, pour simplifier l'opération de démoulage, utiliser une oreille gauche 22 et/ou une oreille droite 23 à usage unique, réalisées dans un matériau soluble, fusible, sublimable, etc. et qui formeraient ainsi des parties perdues du noyau 10, remplacées à chaque nouveau cycle de fabrication d'un bandage 2. De telles parties perdues pourraient être montées sur une couronne centrale 21 réutilisable.

Toutefois, les oreilles 22, 23, de même que la couronne centrale 21, seront de préférence réutilisables d'un cycle de fabrication à l'autre, et à cet effet réalisées dans un matériau durable, tel qu'un alliage d'aluminium.

A cet effet, on prévoira un agencement de l'outillage 1 qui sera adapté au démontage du noyau 10, et plus particulièrement au démontage des sous-ensembles 21, 22, 23, par l'intérieur du bandage 2.

De préférence, tel que cela est notamment visible sur les figures 3A, 4A, 5A, 6A et 10, lesdits sous-ensembles 21, 22, 23 annulaires, à savoir la couronne centrale 21, l'oreille gauche 22, et l'oreille droite 23, sont chacun fractionnés angulairement en secteurs 24, 25, 26, 27, 28, 29, en azimut autour de l'axe central Z10, selon une alternance de secteurs dits « clefs » 24, 26, 28, conçus pour être accessibles par abord radialement interne et pour être retirés en premier lors du désassemblage du sous-ensemble 21, 22, 23 considéré, et de secteurs dits « voûtes » 25, 27, 29, soutenus et bloqués en position par les clefs 24, 26, 28, et conçus pour devenir manœuvrables après qu'ils ont été libérés par le retrait des clefs 24, 26, 28.

Ainsi, tel que cela est bien visible sur les figures 3A et 3B, la couronne centrale 21 est subdivisée en une pluralité de clefs de couronne 24 et de voûtes de couronne 25.

Le nombre de clefs de couronne 24, égal au nombre de voûtes de couronne 25, sera choisi suffisamment élevé pour permettre un fractionnement et un démontage aisé par extraction radiale centripète des secteurs 24, 25 constitutifs de la couronne centrale 21, et néanmoins suffisamment modéré pour ne pas multiplier inutilement les secteurs 24, 25, et donc pour simplifier l'assemblage du sous-ensemble 21 formant la couronne centrale 21. A ce titre, le nombre de clefs de couronne 24, et donc le nombre de voûtes de couronne 25, sera de préférence compris entre 4 et 6, et plus préférentiellement égal à 5, comme c'est le cas sur les figures 3A et 3B.

Par souci de standardisation et par commodité d'assemblage, toutes les clefs de couronne 24 seront de préférence identiques entre elles, et donc interchangeables. De même, toutes les voûtes de couronne 25 seront de préférences identiques entre elles, et donc interchangeables.

De préférence, les faces latérales qui délimitent chaque clef de couronne 24 et qui forment les plans de joint de ladite clef de couronne 24 avec les deux voûtes de couronne 25 adjacentes à ladite clef de couronne 24, seront parallèles entre elles et parallèles au plan méridien sagittal de la clef de couronne 24 considérée. En variante préférentielle, lesdites faces latérales formeront chacune un angle de dépouille non nul, de préférence entre 1 et 2 degrés, par exemple égal à 1,5 degré, par rapport audit plan méridien sagittal, de manière à ce que lesdites deux faces latérales forment des plans sécants qui vont en s'évasant, c'est-à-dire qui s'éloignent en oblique l'un de l'autre, et qui s'éloignent chacun du plan méridien sagittal, au fur et à mesure que l'on se rapproche radialement de l'axe central Z10, lesdits plans sécants formant entre eux un angle d'ouverture qui est égal à la somme des angles de dépouille respectifs desdites faces latérales, ici par exemple un angle d'ouverture de 3 degrés si chaque face présente un angle de dépouille de 1,5 degré. Un tel agencement, qu'il soit à faces latérales parallèles (ce qui revient à avoir un angle de dépouille nul) ou à faces latérales en dépouille (avec un angle de dépouille non nul), permettra en effet avantageusement une extraction radiale centripète de la clef de couronne 24 par rapport aux voûtes de couronne 25 qui bordent ladite clef de couronne 24, ladite extraction s'effectuant par glissement de type « plan sur plan » de ladite clef de couronne 24 contre les voûtes de couronne 25 qui la bordent, de façon stricte dans le cas de faces latérales exactement parallèles, et avec un léger déboîtement dans le cas de faces latérales en dépouille.

Les voûtes de couronne 25 formeront bien entendu des secteurs complémentaires aux clefs de couronne 24, et seront bloquées en position par lesdites clefs de couronne 24 au sein du sous-ensemble 21 annulaire formant la couronne centrale 21. Par analogie avec le domaine architectural, les clefs de couronne 24, par ailleurs positionnées et maintenues par un support commun (non représenté), permettront donc d'empêcher l'effondrement des voûtes de couronne 25, et plus globalement de l'arc formé par la succession desdites clefs 24 et voûtes 25. Ce soutien procuré par les clefs de couronne 24 sera d'autant plus robuste et stable que l'angle de dépouille des faces latérales des clefs de couronne 24 sera élevé.

Pour démonter la couronne centrale 21 et l'extraire hors du bandage 2 lors de l'opération de démoulage, on commencera donc par extraire les clefs de couronne 24, selon un mouvement d'extraction radial centripète, suivi d'un mouvement de dégagement axial, ce qui aura pour effet de libérer les voûtes de couronne 25, qui seront alors extraites à leur tour par un mouvement d'extraction radial centripète, puis un mouvement de dégagement axial.

Afin d'autoriser l'extraction radiale centripète de ses clefs de couronne 24 puis de ses voûtes de couronne 25 par rapport aux oreilles 22, 23 tandis que lesdites oreilles 22, 23 sont encore retenues dans la cavité 9 du bandage 2, la couronne centrale 21 comprendra de préférence, de part et d'autre de la portion centrale de la zone sommitale 11, une première face de dépouille 32 soutenant l'oreille gauche 22, et une seconde face de dépouille 33 soutenant l'oreille droite 23.

Lesdites première et seconde faces de dépouille 32, 33 formeront de préférence respectivement un premier chanfrein 32 et un second chanfrein 33, qui se trouvent radialement plus proche de l'axe central Z10 que les passages 15 destinés aux haubans 16 et qui forment, avec la portion centrale de la zone sommitale 11 un profil convexe, en section dans un plan radial contenant l'axe central Z10, tel que cela est visible sur les figures 4C, 5C, 6C et 24.

Ainsi, au sein du noyau 10 assemblé et utilisé pour confectionner le bandage 2, la couronne centrale 21 est contenue dans un espace qui se trouve radialement en retrait des haubans 16, et en retrait des oreilles 22, 23, et les secteurs 24, 25 de ladite couronne centrale 21 pourront effectuer, après cuisson du bandage 2, et tandis que les oreilles 22, 23 sont encore captives dudit bandage 2, un mouvement d'extraction radial centripète sans interférer avec les oreilles 22, 23 encore en place dans la cavité du bandage 2.

Pour éviter que les parois des rainures 15 ne frottent excessivement contre les haubans 16 ou n'arrachent les haubans lors de l'extraction des secteurs d'oreilles 26, 27, 28, 29, et plus particulièrement lors de l'extraction des clefs d'oreilles 26, 28, lesdits secteurs d'oreilles 26, 27, 28, 29 couvriront chacun un secteur angulaire relativement restreint autour de l'axe central Z10, mais néanmoins suffisamment étendu pour limiter le nombre de secteurs d'oreilles 26, 27, 28, 29 à assembler pour réaliser chaque oreille 22, 23.

En outre, par volonté de standardisation et par commodité d'assemblage, on prévoira de préférence que chaque clef d'oreille 26, 28 d'une oreille 22, 23 occupe un secteur angulaire A26 dont la valeur sera un diviseur entier de 360 degrés, et de préférence dont la valeur est égale à celle des secteurs angulaires occupés par les autres clefs 26, 28 de la même oreille.

De même, chaque voûte 27, 29 d'une oreille 22, 23 occupera de préférence un secteur angulaire A27 dont la valeur sera un diviseur entier de 360 degrés, et de préférence dont la valeur est égale à celle des secteurs angulaires occupés par les autres voûtes 27, 29 de la même oreille 22, 23.

De préférence, le secteur angulaire A26 couvert par chaque clef d'oreille 26, 28, considéré par rapport à l'axe central Z10 et au niveau radialement le plus externe de la surface de réception 10_out de la clef d'oreille 26, 28 concernée, tel que cela est notamment visible sur la figure 10, sera de préférence égal ou supérieur à 9 degrés, et de préférence inférieur ou égal à 36 degrés, et plus préférentiellement égal ou inférieur à 24 degrés, et encore plus préférentiellement égal ou inférieur à 18 degrés.

Dans l'absolu, on pourrait prévoir un secteur angulaire A26 égal à 9 degrés, à 15 degrés, à 18 degrés, voire à 24 degrés, la valeur de 9 degrés étant toutefois préférée au vu des dimensions des bandages 2 envisagés, et plus particulièrement au vu du diamètre maximal correspondant de la surface de réception 10_out, ainsi qu'au vu du pas angulaire de répétition P16 choisi (ici de préférence 1,5 degré).

De même, le secteur angulaire A27 couvert par chaque voûte d'oreille 27, 29, au diamètre maximal de la surface de réception 10_out, sera de préférence égal ou supérieur à 9 degrés, et de préférence inférieur ou égal à 36 degrés, et plus préférentiellement égal ou inférieur à 24 degrés, et encore plus préférentiellement égal ou inférieur à 18 degrés, et par exemple choisi parmi 24 degrés, 18 degrés, 15 degrés ou, plus préférentiellement, 9 degrés.

De préférence, notamment pour simplifier la fixation des secteurs d'oreille 26, 27, 28, 29 sur la couronne centrale 21, le découpage sectoriel de l'oreille gauche 22 sera identique, et coïncidera en azimut, avec le découpage sectoriel de l'oreille droite 23, de sorte que chaque clef 26 de l'oreille gauche 22 sera située en vis-à-vis d'une clef 28 de l'oreille droite 23, et se superposera angulairement à cette dernière en projection dans le plan équatorial P_EQ, et, de même, chaque voûte 27 de l'oreille gauche 22 sera située en vis-à-vis de, et superposée angulairement à, la voûte 29 correspondante de l'oreille droite 23.

On notera que la mise en œuvre éventuelle de secteurs angulaires A26, A27 de 36 degrés chacun aurait pour effet ici de faire coïncider exactement le découpage angulaire des oreilles 22, 23 avec le découpage angulaire de la couronne centrale 21.

Par ailleurs, indépendamment de ou en combinaison avec les valeurs absolues de secteur angulaires A26, A27 susmentionnées, et compte-tenu notamment des valeurs de pas angulaire de répétition P16 envisagées pour les haubans 16 et donc pour les rainures 15, on limitera en conséquence le nombre de rainures 15 par clef d'oreille 26, 28, respectivement par voûte d'oreille 27, 29, et ce afin notamment de pouvoir dégager la clef d'oreille 26, 28 simultanément de tous les haubans 16 qu'elle contient, sans endommager lesdits haubans, en profitant le cas échéant d'une certaine flexibilité et/ou d'un état relativement lâche desdits haubans 16 à l'issue de l'opération de cuisson.

A titre indicatif, pour un agencement des rainures 15 selon des plans radiaux, on comptera de préférence entre 5 et 23 rainures 15 par clef d'oreille 26, 28, préférentiellement entre 5 et 9 rainures par clef d'oreille 24, et plus préférentiellement 7 rainures par clef d'oreille 26, 28 comme cela est illustré sur les figures 7B, 9B et 10.

Les voûtes d'oreille 27, 29 correspondantes pourront de préférence compter entre 3 et 21 rainures 15, de préférence entre 3 et 7 rainures 15, et par exemple 5 rainures 15 comme cela est illustré sur les figures 8B et 10.

Dans l'exemple de la figure 10, on utilise, pour former une oreille 22, 23, d'une part vingt clefs d'oreilles 26 occupant chacune un secteur angulaire A26 d'une valeur de 9 degrés et pourvues chacune de sept rainures portées par des plans radiaux, et d'autre part vingt voûtes d'oreille 27 conjuguées occupant chacune un secteur angulaire A27 d'une valeur de 9 degrés et pourvues chacune de cinq rainures portées par des plans radiaux. Les flancs 40, 41 des clefs d'oreille 26 sont parallèles entre eux, et parallèles au plan méridien sagittal P_MER_26 de chaque clef d'oreille 26 concernée, tandis que les flancs 42, 43 des voûtes d'oreille 27 forment entre eux un angle de 18 degrés, et chacun de 9 degrés par rapport au plan méridien sagittal P_MER_27 de la voûte d'oreille 27 concernée.

Dans le cas de rainures 15 inclinées et croisées, comme c'est le cas sur les figures 11B, 12B, 13B et 14B, on pourra prévoir entre quatre et huit départs de rainures 15, correspondant à autant de points d'ancrage latéraux 18, par secteur d'oreille 26, 27, 28, 29, aussi bien par clef d'oreille 26, 28 que par voûte d'oreille 27, 29, et plus préférentiellement six départs de rainures 15, tel que cela est représenté sur lesdites figures 11B, 12B, 13B et 14B, où chaque secteur comporte trois points de départ pour des rainures 15 inclinées à gauche (c'est-à-dire dans le sens anti-horaire) en projection dans un plan normal à l'axe central Z10 et trois points de départ pour des rainures inclinées à droite (c'est-à-dire dans le sens horaire) en projection dans ledit plan normal à l'axe central Z10.

De préférence, les clefs d'oreille 26, 28 seront identiques et interchangeables au moins au sein d'une même oreille 22, voire permutables d'une oreille 22 à l'autre oreille 23.

De même, les voûtes d'oreille 27, 29 seront de préférence identiques et interchangeables au moins au sein d'une même oreille 22, voire permutables d'une oreille 22 à l'autre oreille 23.

De préférence, les voûtes d'oreille 27, 29, et plus préférentiellement seulement les voûtes d'oreille 27, 29 (et pas les clefs d'oreille 26, 28), seront fixées sur la couronne centrale 21, et plus particulièrement sur les faces de dépouilles 32, 33, au moyen de vis, vis qui sont engagées de façon radiale centrifuge depuis l'espace intérieur, vide, de la couronne centrale 21, pour venir en prise sur la face radialement interne desdites voûtes d'oreille 27, 29, et dont on voit les trous de passage 34 à travers la couronne centrale 21 sur les figures 3A, 3B, 4A, 4C, 5A, 5C, 6A, 6C.

Les clefs d'oreille 26, 28 pourront coopérer avec les voûtes d'oreille 27, 29, et ainsi être positionnées et retenues, au moyen de goupilles, engagées dans des trous de goupille 35 prévus dans les clefs 26, 28, tels que visibles sur les figures 7A, 9A, 11A, et qui viennent s'engager dans des logements 36 correspondants prévus dans les voûtes d'oreille 27, 29, comme illustré sur les figures 8A ou 21B.

En variante, les clefs d'oreille 26, 28 pourront être pourvues de tenons 37 saillants, tels que visibles sur les figures 13A, 13D, 15A, 15C, destinés à venir coopérer avec des mortaises 38 prévues dans les voûtes d'oreille 27, 29, comme cela est visible sur la figure 14A.

De préférence, les secteurs d'oreille 26, 27, 28, 29, aussi bien les clefs d'oreille 26, 28 que les voûtes d'oreille 27, 29, seront réalisées dans un alliage métallique, plus préférentiellement dans un alliage d'aluminium, afin de présenter une bonne rigidité, et une bonne capacité de conduction de la chaleur, avec une inertie thermique relativement faible. Dans le cas où l'on met en œuvre de rainures 15 entrecroisées, on pourra préférer réaliser les secteurs d'oreille 26, 27, 28, 29 dans un matériau métallique plus robuste que l'aluminium, par exemple un acier maraging, afin d'améliorer la solidité des prismes 20.

De façon préférentielle, les secteurs d'oreille 26, 27, 28, 29 seront réalisés par fabrication additive, ce qui simplifiera la fabrication de géométries relativement complexes.

Selon une possibilité de mise en œuvre, les flancs 40, 41 d'au moins une clef d'oreille 26, 28 qui délimitent le secteur angulaire A26 occupé en azimut par ladite clef d'oreille 26, 28 autour de l'axe central Z10 et qui forment ainsi les plans de joints PJ selon lesquels ladite clef d'oreille 26, 28 vient coopérer avec les voûtes d'oreille 27, 29 adjacentes à ladite clef d'oreille 26, 28 au sein du sous-ensemble 22, 23 annulaire, c'est-à-dire au sein de l'oreille 22, 23 correspondante à l'état assemblé, sont parallèles à un plan fictif dit « plan méridien sagittal » P_MER_26, qui correspond au plan radial qui contient l'axe central Z10 et qui coupe le secteur angulaire A26 occupé par la clef d'oreille 26, 28 considérée en son milieu, tel que cela est visible 7B, 9B, 10 et 11B, de sorte que lesdits flancs 40, 41 autorisent une extraction de la clef d'oreille 26, 28 hors des voûtes d'oreilles 27, 29 qui lui sont adjacentes par glissement et/ou basculement le long desdits plans de joints PJ, tel que cela est illustré sur les figures 20A à 20D, 21A et 21B.

Le plan méridien sagittal P_MER_26 subdivise l'arc qui marque la limite radiale la plus externe de la clef d'oreille 26, 28 considérée, et donc l'arc qui correspond, en projection dans un plan normal à l'axe central Z10, à la limite radialement la plus externe de la portion de la surface de réception 10_out appartenant à ladite clef d'oreille 26, 28, en deux demi-arcs égaux, portés par des demi-secteurs angulaires adjacents de même couverture angulaire azimutale valant A26/2.

Les flancs 42, 43 des voûtes d'oreille 27, 29 sont de préférence formés par des plans qui sont orientés, de part et d'autre du plan méridien sagittal P_MER_27 de la voûte 27, 29 concernée, selon des directions conjuguées à celles des flancs 40, 41 de clefs d'oreille 26, 28.

Ainsi, au sein de l'oreille 22, 23, les clefs d'oreille 26, 28 et les voûtes d'oreille 27, 29 sont aboutées les unes aux autres en appui-plan, ce qui confère aux clefs d'oreille 26, 28 trois degrés de liberté potentiels par rapport aux voûtes d'oreille 27, 29, à savoir deux degrés de liberté en translation selon deux directions sécantes définissant les plans de joint PJ, ici typiquement la direction axiale et la direction radiale, et un degré de liberté en rotation autour d'un axe normal aux plans de joint PJ, ici donc autour d'un axe correspondant au vecteur directeur de la direction circonférentielle, ledit degré de liberté en rotation permettant de basculer la clef en tangage comme cela est illustré sur les figures 20D, 20E, 21B et 21C.

On notera qu'un tel agencement de clefs d'oreille 26, 28 à flancs 40, 41 plans et parallèles peut être mis en œuvre aussi bien avec des rainures 15 agencées selon des plans radiaux (figures 7A, 7B, 7C, 9A, 9B, 9C, 10 et 23), auquel cas le plan méridien sagittal P_MER_26 de la clef d'oreille 26, 28 coïncide de préférence avec le plan méridien sagittal d'une rainure 15, qu'avec des rainures 15 obliques entrecroisées (figures 11A, 11B, 11C), dès lors que les rainures 15 sont creusées selon une forme adaptée.

Selon une possibilité de mise en œuvre, les rainures 15 d'un même secteur d'oreille 26, 27, 28, 29 sont délimitées chacune par deux parois latérales qui sont générées en suivant une direction génératrice axiale DG_A qui est vectoriellement colinéaire, c'est-à-dire parallèle, à l'axe central Z10, tel que cela est le cas sur les variantes des figures 7A, 8A, 9A et 10 comprenant des rainures 15 portées par des plans radiaux, mais également sur la variante des figures 11A et 12A comprenant des rainures 15 inclinées entrecroisées.

Alternativement, selon une possibilité de mise en œuvre proche de la précédente car elle revient à utiliser des directions génératrices sensiblement mais pas exactement parallèles à l'axe central Z10, les rainures 15 d'un même secteur d'oreille 26, 27, 28, 29 sont délimitées chacune par deux parois latérales qui forment des faces de dépouilles qui vont en s'évasant depuis le fond 19 de la rainure 15 jusqu'à la surface de réception 10_out de sorte à dégager, dans tout l'intérieur de la rainure 15 concernée, un espace libre qui contient un volume fictif, dit « volume gabarit nécessaire », généré en exécutant un balayage virtuel du hauban 16 concerné selon une trajectoire virtuelle de sortie, ici depuis l'emplacement dudit hauban 16 proche du fond 19 de la rainure 15 jusqu'à la surface de réception 10_out, portée par une direction génératrice axiale DG_A vectoriellement colinéaire, c'est-à-dire parallèle, à l'axe central Z10.

Dans les deux cas, à savoir que les parois latérales des rainures 15 soient générées selon une direction génératrice DG_A strictement axiale ou sensiblement axiale (en dépouille), un tel agencement des parois latérales fait que lesdites rainures 15 autorisent une extraction axiale du secteur d'oreille 26, 27, 28, 29 concerné, selon un mouvement d'extraction axial M_A qui est parallèle à l'axe central Z10 et dirigé vers le plan équatorial P_EQ du noyau 10, tel que cela est illustré sur les figures 20B, 20C, et 21A, sans que les parois latérales desdites rainures 15 n'interfèrent avec les haubans 16 lors dudit mouvement d'extraction axial M_A.

En effet, si l'on fait sortir en ligne droite les haubans 16 logés dans même secteur d'oreille 26, 27, 28, 29, c'est-à-dire qu'on extrait lesdits haubans 16 hors des rainures 15 en translation rectiligne en faisant exécuter au secteur d'oreille 26, 27, 28, 29 concerné un mouvement d'extraction selon la direction génératrice axiale DG_A, les haubans 16 balayent, par définition, un volume correspondant au volume-gabarit nécessaire susmentionné, volume dont les limites latérales définissent les bords, rectilignes et parallèles à la direction génératrice axiale DG_A, d'une enveloppe à l'intérieur de laquelle les blocs de matière délimitant les rainures 15 ne doivent pas pénétrer pour ne pas gêner l'extraction. Par conséquent, si les parois latérales des rainures 15 n'étaient pas parallèles à cette direction génératrice axiale DG_A, ou si lesdites parois latérales n'étaient pas évasées par rapport à cette direction génératrice DG_A pour former des faces de dépouilles allant en s'ouvrant vers la surface de réception 10_out, alors lesdites parois latérales interféreraient avec le volume-gabarit, et lesdites parois latérales des rainures 15 formeraient donc des obstacles qui entreraient en collision avec les haubans 16 lors de l'extraction, et qui créeraient par conséquent, par effet de rampe, une poussée transverse qui tendrait à écarter les haubans 16 de leur position souhaitée, et qui serait susceptible d'endommager voire de rompre les haubans 16.

Bien entendu, quel que soit l'agencement retenu pour les parois latérales des rainures, la largeur W15 desdites rainures, qui correspond à la distance qui sépare les deux parois latérales délimitant la rainure 15 considérée, présentera les proportions et/ou dimensions mentionnées plus haut, et en particulier pourra donc être comprise entre 0,1 mm et 3 mm.

Selon une possibilité de mise en œuvre, lorsque le noyau 10 possède des oreilles 22, 23 subdivisées angulairement en secteurs 26, 27, 28, 29 et que les passages 15 pour haubans sont formés par des rainures 15 entrecroisées, les rainures 15 entrecroisées d'un même secteur d'oreille 26, 27, 28, 29 pourront être délimitées chacune par deux parois latérales qui sont générées en suivant une direction génératrice oblique DG_O, tel que cela est le cas sur les figures 13A à 13D, 14A à 14D, 15A à 15C, 17, 18A, 19 et 22A à 22C, direction génératrice oblique DG_O qui est contenue dans le plan radial qui coupe le secteur d'oreille 26, 27, 28, 29 considéré en son milieu, dit « plan méridien sagittal » P_MER_26, P_MER_27, et qui, dans ledit plan méridien sagittal P_MER_26, P_MER_27, converge vers l'axe central Z10 dans le sens allant de l'oreille 22, 23 concernée vers l'oreille 23, 22 opposée, et forme avec l'axe central Z10 un angle A44, dit « angle de colatitude » A44, qui est non nul et strictement inférieur à 90 degrés, de préférence compris entre 30 degrés et 50 degrés, par exemple compris entre 40 degrés et 47 degrés, et par exemple égal à 45 degrés.

Avantageusement, la direction génératrice oblique DG_O « plonge » ainsi vers le plan équatorial P_EQ, et vers l'oreille opposée 23, 22, et autorisera donc une extraction du secteur d'oreille 26, 27, 28, 29 concerné selon un mouvement d'extraction oblique M_O, qui sera dirigé vers l'intérieur du noyau 10, et qui comprendra simultanément une composante axiale et une composante radiale.

A ce titre, on notera que la valeur absolue de l'angle de colatitude A44 sera choisie égale ou inférieure à l'angle que forme, dans le plan méridien sagittal P_MER_26, P_MER_27, la tangente T4 à la surface interne 8_in de la paroi 8 du bandage 2 au niveau du bourrelet 4, considérée au point où ledit bourrelet 4 forme la contre-dépouille la plus marquée, de sorte que l'orientation de ladite tangente T4 par rapport à l'axe central Z10 définit le « seuil de démoulabilité », c'est-à-dire l'angle de colatitude maximal que peut présenter le mouvement d'extraction oblique M_O pour démouler le secteur d'oreille 26, 27 concerné en glissant le long de la surface interne du bourrelet 4 sans être bloqué par ledit bourrelet 4, et donc sans forcer un écartement (une ouverture) du bourrelet 4 et du flanc 6 correspondant du bandage 2 lors de l'opération de démoulage, tel que cela est illustré sur les figures 22A, 22B, 22C. Bien entendu, les considérations applicables à l'oreille gauche 22 seront adaptables *mutatis mutandis* à l'oreille droite 23.

On notera également que, avantageusement, le fait de générer les parois latérales des rainures 15 entrecroisées selon une direction génératrice oblique DG_O, plus proche de la normale au fond 19 des rainures 15 que ne l'est la direction axiale, permet de réduire, par rapport à une direction génératrice axiale DG_A, la hauteur des prismes 20 (ou piliers) qui forment les parois des rainures 15 entrecroisées et qui s'étendent entre le fond 19 des rainures et l'ouverture desdites rainures 15 sur la surface de réception 10_out, comme cela apparaît très nettement lorsque l'on compare les figures 13A et 13C respectivement aux figures 11A et 11C. Lesdits prismes 20, et donc les secteurs d'oreille 26, 27, 28, 29, sont ainsi plus rigides et plus solides.

Lorsque l'on opte pour le mode de mise en œuvre selon lequel les parois latérales des rainures 15 sont générées selon une direction génératrice oblique DG_O, les flancs 40, 41, et donc les plans de joint PJ, qui délimitent la clef d'oreille 26, 28 concernée peuvent de préférence être générés en suivant la direction génératrice oblique DG_O à partir d'un profil de base 45 qui correspond i) soit, selon une première possibilité, à l'intersection 46 de la surface de réception 10_out avec un plan radial P1, P2 qui est décalé angulairement en azimut par rapport au plan méridien sagittal P_MER_26 de ladite clef d'oreille 26, 28 d'une valeur telle que le profil de base 45 passe par les sommets opposés des motifs du quadrillage (c'est-à-dire les bases des prismes 20 susmentionnés), ici donc par les sommets opposés des quadrilatères, qui sont définis sur la surface de réception 10_out par les rainures 15 entrecroisées et qui se succèdent depuis la zone sommitale 11 jusqu'à la zone latérale 12, 13 le long dudit profil de base 45, tel que cela est visible sur les figures 13B, 13D, 14B, 14D, 15A, 16B et 17, ii) soit, selon une seconde possibilité, à la ligne brisée 47 en zigzag formée, sur la surface de réception 10_out, par l'alternance des côtés des motifs du quadrillage (les bases des prismes 20 susmentionnés), ici donc par l'alternance des côtés des quadrilatères, qui sont définis sur la surface de réception par les rainures 15 entrecroisées et qui se succèdent depuis la zone sommitale 11 jusqu'à la zone latérale 12, 13, tel que cela est illustrés sur les figures 18A, 18B et 19.

Dans les deux cas, un tel choix du profil de base 45 permet avantageusement d'éviter ou de limiter fortement les « aberrations », c'est-à-dire les décalages, au niveau des plans de joint PJ, entre les rainures 15 appartenant à la clef d'oreille 26, 28 située d'un côté dudit plan de joint PJ et les rainures 15 appartenant à la voûte d'oreille 27, 29 accolée à ladite clef d'oreille et située de l'autre côté dudit plan de joint PJ. Ces aberrations résultent du fait que les parois latérales des rainures 15 sont générées selon une même direction génératrice oblique DG_O, donc parallèlement les unes aux autres, de sorte que les rainures 15 d'un même premier secteur d'oreille 26, 27, 28, 29 ne suivent plus une répartition circulaire strictement radiale, et que leurs extrémités débouchant sur les plans de joint PJ, au niveau de la surface de réception 10_out, ne coïncident donc pas toujours avec les extrémités des rainures 15 du secteur d'oreille voisin auxquelles les rainures 15 du premier secteur d'oreille doivent se raccorder.

Grâce au choix judicieux du profil de base 45, on s'assure malgré tout d'un raccordement convenable, et d'une continuité des rainures 15, au franchissement des plans de joint PJ, sur la surface de réception 10_out, puisque les rainures d'un secteur d'oreille se retrouvent ainsi sensiblement dans le prolongement des rainures correspondantes du secteur d'oreille voisin, ce qui garantit que l'on pourra aisément insérer les haubans 16 dans les rainures 15 depuis l'extérieur du noyau 10, par abord sensiblement radial, en passant à travers la surface de réception 10_out.

La solution consistant à opter pour un profil de base 45 qui suit une ligne brisée 47 formant alternativement des angles rentrants et des angles saillants, au fil des parois définies par les prismes 20 successifs (comme illustrée en pointillés sur les figures 18A, 18B, 19), donne globalement satisfaction et permet un emboîtement robuste et précis des clefs d'oreille 26, 28 dans les voûtes d'oreille 27, 29, mais présente l'inconvénient de créer des zébrures qui tendent à élargir localement certaines rainures 15 au niveau de la surface de réception 10_out, le long des plans de joint PJ, tel que cela est visible sur la figure 19.

C'est pourquoi on pourra préférer la première solution, selon laquelle le profil de base 45 est la courbe 46 dessinée sur la surface de réception 10_out par l'intersection des plans radiaux P1, P2 avec ladite surface de réception 10_out et qui passe par les sommets des quadrilatères, selon une diagonale commune aux quadrilatères successifs, comme illustré sur les figures 13A, 13B, 13D, 14D, 15A et 17.

En effet, une telle solution permet avantageusement de faire coïncider les nœuds du réseau de quadrilatères définis par les rainures entrecroisées (c'est-à-dire les nœuds formés par les intersections entre deux rainures), et plus globalement les nœuds du réseau de prismes 20, appartenant à la clef d'oreille 26 considérée avec les nœuds du réseau de quadrilatères appartenant à la voûte d'oreille 27 correspondante située de l'autre côté du plan de joint PJ. On garantit ainsi la continuité des rainures 15 au niveau de leur raccordement entre secteurs d'oreille successifs, et ce sans altérer significativement la largeur W15 desdites rainures 15.

Le principe géométrique de génération des profils de base 45 correspondant à l'intersection 46 de la surface de réception 10_out avec les plan radiaux P1, P2 est illustré sur les figures 16A à 16D.

On commence, tel qu'illustré sur la figure 16A, par identifier le plan méridien sagittal P_MER_26 du secteur d'oreille, ici dans l'exemple une clef d'oreille 26, dont on souhaite définir les flancs 40, 41. A cet effet, on définit deux plans radiaux P1, P2 virtuels, situés de part et d'autre du plan méridien sagittal P_MER_26, chacun à une même distance angulaire dudit plan méridien sagittal P_MER_26, égale à la moitié de la valeur de la couverture angulaire A26 souhaitée pour le secteur d'oreille 26.

Avantageusement, la valeur de la couverture angulaire A26 étant un multiple (entier) du pas de répétition P16 des rainures 15, il est possible de placer chaque plan radial P1, P2 au droit des nœuds formés par les sommets des quadrilatères dessinés par les rainures 15 entrecroisées.

On considère ensuite, comme illustré sur la figure 16B, les profils de base 45 qui correspondent aux courbes 46 formant les intersections de la surface de réception 10_out toroïdale avec les plans radiaux P1, P2.

On génère alors, en partant de ces courbes 46, les flancs 40, 41 du secteur d'oreille 26, par balayage en translatant lesdites courbes 46 selon un direction génératrice oblique DG_O rectiligne, contenue dans le plan méridien sagittal P_MER_26 et orientée selon un angle de colatitude A44 choisi de sorte à plonger vers l'axe central Z10 que ladite direction génératrice oblique DG_O intersecte (figure 16C).

En pratique, de manière équivalente, cela revient à effectuer une découpe des flancs 40, 41 du secteur d'oreille 26 à partir d'une projection du profil de base 45, 46 dans un plan P3 normal à la direction génératrice oblique DG_O choisie, comme illustré sur la figure 16D.

Par ailleurs, quelle que soit la variante de réalisation envisagée pour les secteurs d'oreille 26, 27, 28, 29, et en particulier lorsque les secteurs d'oreilles comprennent des rainures 15 inclinées entrecroisées générées selon une direction génératrice oblique DG_O, les passages 15 pour les haubans 16, ici les rainures 15, étant délimités par des parois latérales, alors le noyau 10 peut de préférence présenter, au dos desdites parois latérales, sous la surface de réception 10_out, et pénétrant entre les passages 15, des évidements 50 qui sont distincts des passages 15 et séparés desdits passages 15 par les parois latérales, tel que cela est illustré sur les figures 15B et 15C.

Les évidements 50 pratiqués dans les secteurs d'oreilles 26, 27, 28, 29 s'ouvrent vers l'intérieur du noyau 10, ici plus particulièrement sur les faces d'appui des secteurs d'oreille qui viennent reposer contre les faces de dépouilles 32, 33 de la couronne.

Lesdits évidements remontent de préférence à une profondeur, sous la surface de réception 10_out, qui est inférieure à la profondeur en creux des passages 15 bordant les évidements, c'est-à-dire qui est inférieure à la profondeur du fond 19 des rainures 15, de sorte que le noyau 10 présente une peau plus fine au droit des évidements 50 qu'au droit des parois latérales des passages 15.

De tels évidements 50 permettent de conférer aux oreilles 22, 23 une structure qui est légère et, surtout, qui présente une faible inertie thermique, et qui optimise donc la transmission de chaleur depuis la couronne centrale 21, qui contient de préférence des éléments chauffants tels que des résistances électriques chauffantes.

On peut ainsi, selon une caractéristique préférentielle qui peut constituer une invention à part entière, notamment en combinaison avec un découpage angulaire sectoriel des oreilles 22, 23 et/ou de la couronne centrale 21, réaliser un noyau 10 au sein duquel seule la couronne centrale 21, et plus particulièrement les secteurs 24, 25 de ladite couronne centrale 21, contiennent des éléments chauffants, tels que des résistances électriques chauffantes, tandis que les oreilles 22, 23 sont dépourvues d'éléments chauffants, et néanmoins assurer une montée en température rapide et homogène de la surface de réception 10_out lors de l'opération de cuisson du bandage 2.

Par ailleurs, selon une caractéristique préférentielle qui peut constituer une invention à part entière, et qui peut s'appliquer à toute variante décrite dans ce qui précède, en particulier lorsque les passages 15 pour haubans 16 sont formés par des rainures 15, l'outillage 1 peut comprendre un dispositif anti-pénétration 60 qui coopère avec le noyau 10 pour faire obstacle à une pénétration des composants constitutifs du sommet 3, des flancs 6, 7 ou des bourrelets 4, 5 du bandage 2 dans les passages 15 du noyau 10 dans lesquels sont engagés les haubans 16.

Plus particulièrement, le dispositif anti-pénétration 60 empêche les matériaux, et notamment les compositions à base de caoutchouc, présents dans les composants du bandage 2 de pénétrer dans les rainures 15 par fluage, et ce afin d'empêcher la formation de bavures de caoutchouc qui viendraient coller les haubans 16 aux parois des rainures 15, et qui créeraient donc un risque d'arrachement des haubans 16 au moment de l'extraction des secteurs d'oreille 26, 27, 28, 29 correspondants.

Le dispositif anti-pénétration 60 pourra comporter des éléments de masquage 61, 62, destinés à former un écran, à la surface de réception 10_out, entre les composants de la paroi 8 du bandage et les ouvertures des passages 15 pour haubans, ici les ouvertures des rainures 15. Les éléments de masquage 61 seront bien entendu choisis de manière à être compatibles avec les valeurs élevées de température (typiquement plus de 100°C) et de pression (typiquement plus de 60 bars) auxquelles sont exposés le noyau 10 et le bandage 2 pendant l'opération de cuisson.

Comme éléments de masquage, on pourra par exemple employer du ruban flexible, tel que du ruban métallique, en acier par exemple, maintenu par un adhésif, par exemple par un ruban adhésif, ruban flexible que l'on viendra appliquer sur la surface de réception 10_out, après mise en place des haubans 16 dans les rainures 15, afin de recouvrir les rainures 15.

Selon une possibilité préférentielle de mise en œuvre, les éléments de masquage comprendront des coques 61 réutilisables, par exemple en polymère ou de préférence en métal.

Lesdites coques 61 présenteront de préférence une forme incurvée en C de sorte que chacune desdites coques 61 puisse, de préférence d'un seul tenant, recouvrir en continu les ouvertures des rainures 15 depuis la zone latérale 12, 13 jusqu'à la zone sommitale 11, en épousant le bombé du noyau 10, ici le bombé des oreilles 22, 23, tel que cela est visible sur les figures 6A, 6B, 6C, 20A, 21A.

Selon un agencement préféré, tel que visible sur les figures 6C, 9A, 9B et 9C, les secteurs d'oreille 26, 27, 28, 29 pourront comporter une empreinte 62 dans laquelle la coque 61 correspondante vient s'emboîter et est avantageusement positionnée et maintenue par un ou plusieurs épaulements. La profondeur de ladite empreinte 62 sera de préférence telle que la surface radialement externe de la coque 61 affleure la surface de réception 10_out voisine.

De préférence, par commodité de démontage, on prévoira une coque 61 distincte pour chaque secteur d'oreille 26, 27, 28, 29, et chaque coque 61 couvrira un secteur angulaire A26, A27 identique à celui de la clef d'oreille 26, 28, respectivement de la voûte d'oreille 27, 29 que ladite coque 61 vient coiffer, tel que cela est bien visible sur la figure 6A.

De préférence, toute les coques 61 seront identiques entre elles et donc interchangeables entre elles, au moins au sein d'une même oreille 22, et de préférence entre les deux oreilles 22, 23.

Les éléments de masquage pourront également comprendre, de préférence en complément des coques 61, des bandeaux de masquage 63, formés par des rubans, de préférence en métal, du genre feuillard, qui pourront contribuer à masquer les ouvertures des rainures dans la zone sommitale 11 de la surface de réception 10_out, de préférence en chevauchant partiellement les coques 61, tel que cela est notamment illustré sur les figures 6A, 6B, 6C. Le chevauchement pourra s'étendre axialement sur quelques millimètres, par exemple sur 3 mm à 15 mm.

Le fractionnement de l'écran de masquage en coques 61 et bandeaux de masquage 63 contribue à faciliter le démoulage, et plus particulièrement l'extraction des coques 61 et des bandeaux 63 par l'intérieur du bandage, entre les haubans 16. Le chevauchement entre coque 61 et bandeau 63 permet quant à lui avantageusement d'éviter de créer un interstice de fuite entre ces deux éléments de masquage.

De préférence, l'outillage 1 comprendra deux jeux de coques 61, un de chaque côté du plan équatorial P_EQ, et deux bandeaux 63 faisant chacun un tour complet autour de l'axe central Z10 et situés chacun d'un côté du plan équatorial P_EQ, comme cela est visible sur les figures 6A, 6B, 6C.

Les bandeaux 63 s'interrompront chacun en retrait axialement du plan équatorial P_EQ, de sorte à laisser apparente la portion de zone sommitale 11 formée par la couronne centrale 21, et au niveau de laquelle on formera le point d'ancrage sommital 17.

En variante, en complément ou de préférence en alternative à des éléments de masquage 61, 63, le dispositif anti-pénétration 60 pourra comporter des éléments de comblement 65 conçus pour remplir et ainsi sensiblement obturer l'espace interstitiel qui reste vacant au sein des passage 15 après mise en place des haubans 16 dans lesdits passages 15.

Plus particulièrement les éléments de comblement 65 pourront venir occuper l'espace libre qui est compris entre les parois latérales des rainures 15, le hauban 16 contenu dans la rainure considérée, et l'ouverture de ladite rainure considérée à la surface de réception 10_out.

Toute substance adaptée, apte à s'insinuer dans les passages 15 et suffisamment dense pour empêcher, ou freiner sensiblement, la pénétration dans la rainure 15 des matériaux constitutifs des composants du bandage, et en particulier des mélanges à base de caoutchouc non vulcanisé, pourra être employée en tant qu'élément de comblement 65.

Selon un exemple de mise en œuvre, illustré sur la figure 23, les éléments de comblement pourront être formés par des cales 65 rigides, de préférence métalliques, de forme sensiblement conjuguée aux cavités des rainures 15, et que l'on insérera dans lesdites rainures 15 après avoir engagé préalablement les haubans 16 dans lesdites rainures.

Bien entendu, l'invention concerne également un procédé de fabrication d'un bandage 2 haubané sur un noyau 10.

Un tel procédé revient en pratique de préférence à utiliser un outillage 1 tel que décrit dans ce qui précède.

Ainsi, l'invention porte également sur un procédé de fabrication d'un bandage 2 toroïdal comprenant un sommet 3 destiné à former une bande de roulement, un premier bourrelet 4 annulaire et un second bourrelet 5 annulaire conçus pour permettre l'accrochage du bandage sur un support de montage tel qu'une jante, ainsi qu'un premier flanc 6 et un second flanc 7 qui relient le sommet 3 respectivement au premier bourrelet 4 et au second bourrelet 5, le sommet 3, les premier et second flancs 6, 7 et les premier et second bourrelets 4, 5 formant dans leur ensemble une paroi 8 présentant une surface interne 8_in concave qui délimite une cavité 9 du bandage 2, ledit bandage 2 comprenant des éléments de renfort 16, dits « haubans » 16, qui s'étendent chacun dans la cavité 9 du bandage en reliant un point d'ancrage sommital 17 situé dans le sommet 3 du bandage à un point d'ancrage latéral 18 situé dans l'un des flancs 6, 7 ou des bourrelets 4, 5 du bandage.

Ledit procédé comprend une étape (S0) de préparation, au cours de laquelle on prépare un outillage 1 selon l'invention.

Plus particulièrement, lors de ladite étape (S0) de préparation, on assemblera les clefs de couronne 24 et voûtes de couronne 25 pour former la couronne centrale 21, tel que cela est illustré sur les figures 3A et 3B, puis l'on fixera, sur chacune des faces de dépouille 32, 33 de ladite couronne centrale 21 une succession de clefs d'oreille 26, 28 et de voûtes 27, 29 d'oreille pour former les oreilles 22, 23, tel que cela est illustré notamment sur les figures 4A à 4C, et 5A à 5C.

Le procédé comprend ensuite une étape (S2) de mise en place de haubans 16, au cours de laquelle on passe au moins un fil de renfort 70, destiné à former un hauban 16, à travers chaque passage 15 du noyau 10.

De préférence on utilise un seul et même fil de renfort 70 continu, monobrin ou multibrin, pour former plusieurs haubans 16, de préférence plus de 25 %, plus de 50 %, voire la totalité du nombre des haubans 16 du bandage 2.

Pour ce faire, on dispose de préférence le fil de renfort 70 continu en serpentin à travers les passages 15 successifs, ici en insérant ledit fil de renfort 70 dans les rainures 15, sous la surface de réception 10_out, et en faisant ressortir ledit fil de renfort 70 par-dessus la surface de réception 10_out dans la zone sommitale 11 et dans les zones latérales 12, 13, au niveau des points d'ancrage 17, 18 souhaités, tel que cela est visible sur la figure 24, en faisant ainsi aller puis revenir d'un seul tenant ledit fil de renfort 70 continu d'une zone latérale 12 du noyau 10 à l'autre zone latérale 13 en passant par la zone sommitale 11, tel que cela est visible sur la figure 25, de sorte à former des ondulations, ici d'amplitude sensiblement symétrique par rapport au plan équatorial P_EQ.

Le procédé comprend ensuite une étape (S4) de garnissage au cours de laquelle on dépose sur la surface de réception 10_out les composants constitutifs du sommet 3, des flancs 6, 7 et des bourrelets 4, 5 du bandage, afin de construire la paroi 8 du bandage 2.

Lesdits composants comprendront de préférence des bandes ou des nappes à base de caoutchouc, éventuellement renforcées par des fils de renforts longitudinaux, en textile, en polymère, ou en métal. D'autres composants de renfort pourront être prévus, tels que des bandes composites à base de fibre de verre et de résine.

Tout ou partie desdits composants pourront de préférence être posés par enroulement sur le noyau 10 mis en rotation.

Le procédé comprend ensuite une étape (S5) de cuisson.

Au cours de celle-ci, on place le noyau 10 et le bandage 2 porté par ledit noyau 10 dans un moule de cuisson, afin de vulcaniser les composants du bandage 2 à base de caoutchouc. A cet effet, la température du moule, et plus particulièrement du bandage, sera de préférence portée à une valeur comprise entre 120°C et 200°C.

Le procédé comprend ensuite une étape (S6) de démoulage au cours de laquelle on dégage le noyau 10 du bandage 2 en laissant les haubans 16 en place dans la cavité 9 dudit bandage 2, tel que cela est notamment illustré sur les séquences des figures 20A à 20F, 21A à 21C, et 22A à 22C.

Si une partie du noyau 10, par exemple les oreilles 22, 23, est à usage unique, on pourra la détruire par le procédé approprié (fusion, dissolution, délitement, choc, sublimation, etc.) pour libérer la cavité 9 et les haubans 16.

Si, comme c'est de préférence le cas, le noyau 10 est réutilisable, et donc formé d'un assemblage modulaire de pièces démontables, on procédera au démontage et à l'extraction progressive desdites pièces pour libérer le bandage 2.

De préférence, suite à l'étape (S0) de préparation, et avant l'étape (S2) de mise en place de haubans 16, ledit procédé comprend une étape (S1) de pré-garnissage au cours de laquelle, tel que cela est illustré sur la figure 24, on pose sur les zones latérales 12, 13 et sur la zone sommitale 11 de la surface de réception 10_out du noyau 10, en vis-à-vis des points d'ancrage 18, 17 prévus pour attacher les haubans 16 à la paroi 8 du bandage, des structures d'ancrage 71, 72 qui sont conçues pour recueillir les extrémités des haubans 16 qui émergent des passages 15 du noyau 10 et pour venir adhérer aux composants constitutifs des flancs 6, 7 ou des bourrelets 4, 5, respectivement aux composants constitutifs du sommet 3, en prenant en sandwich lesdites extrémités des haubans 16 entre les structures d'ancrage 71, 72 et lesdits composants, afin d'assurer la fixation des haubans 16 aux points d'ancrage 18, 17 prévus.

De préférence, les structures d'ancrage 71, 72 seront formées en matériau à base de caoutchouc non vulcanisé, éventuellement renforcé au moyen de fils ou de fibres de renfort. Les structures d'ancrage 71, 72 pourront par exemple prendre la forme de bandes ou de spires de renfort enroulées sur le noyau 10.

Les structures d'ancrage 71, 72 étant positionnées en attente sur la face de réception 10_out, hors des portions rainurées, au niveau des points d'ancrage 18, 17 souhaités, on mettra en place les haubans 16 dans les passages en faisant en sorte que les portions desdits haubans 16 qui émergent des passages 15 viennent se positionner par-dessus lesdites structures d'ancrage 71, 72, de sorte que lorsque l'on pose ensuite les composants de la paroi 8 du bandage, lesdits composants adhèrent aux structures d'ancrage déjà en place sur le noyau 10, et lesdites structures d'ancrage 71, 72 intègrent donc la paroi 8 du bandage 2, en pinçant ainsi les extrémités des haubans 16 à l'intérieur de la paroi 8, au niveau des points d'ancrage 18, 17 prévus.

De préférence, ce sont les boucles formant les extréma des ondulations du serpentin de fil de renfort 70 continu, et qui correspondent donc au zones de transition entre deux haubans successifs appartenant à un même hémisphère, qui forment les portions des haubans 16 qui se retrouveront captives des structures d'ancrage 71 latérales placées sur les zones latérale 12, 13, pour former les points d'ancrage latéraux 18 des haubans, tandis que les portions intermédiaires du fil de renfort continu 70 qui relient deux haubans 16 successifs appartenant à deux hémisphères différents, en émergeant de la rainure 15 du premier hauban afin de parcourir la zone sommitale 11 de la surface de réception 10_out et traverser le plan équatorial P_EQ puis replonger dans la rainure 15 du second hauban 16, se retrouveront captives de la structure d'ancrage 72 sommitale.

De préférence, postérieurement à l'étape (S2) de mise en place de haubans 16, le procédé comprend une étape (S3) de protection, au cours de laquelle on met en œuvre un dispositif anti-pénétration 60 qui, pendant l'étape (S4) de garnissage et pendant l'étape (S5) de cuisson, coopère avec le noyau 10 pour faire obstacle à une pénétration des composants constitutifs du sommet 3, des flancs 6, 7 ou des bourrelets 4, 5 du bandage 2 dans les passages 15 du noyau 10, ici dans les rainures 15, dans lesquels sont engagés les haubans 16.

Par exemple, on pourra ainsi appliquer sur la surface de réception 10_out, après l'étape (S2) de mise en place des haubans et avant l'étape (S4) de garnissage, des éléments de masquage, du genre coques 61 et/ou bandeaux de masquage 63, tels que décrits plus haut, qui viennent recouvrir les passages 15 et ainsi faire écran entre lesdits passages 15 et les composants de la paroi 8 du bandage, tel que cela est illustré sur les figures 6A et 6B, ou bien en utilisant un élément de comblement 65, tel qu'une cale 65 (figure 23), qui remplit provisoirement, au moins pendant l'étape (S5) de cuisson, voire également pendant l'étape (S4) de garnissage, le volume de chaque passage 15 qui est laissé libre entre le hauban 16 engagé dans ledit passage 15 et la ou les ouvertures dudit passage 15 qui débouchent sur la surface de réception 10_out.

De préférence, le noyau 10 comprenant d'une part une couronne centrale 21, et d'autre part une oreille gauche 22 et une oreille droite 23 contenant les passages 15 de haubans 16 sous forme de rainures 15 qui sont ouvertes sur la surface de réception 10_out, chacune desdites couronne centrale 21 et oreilles 22, 23 étant fractionnée angulairement en secteurs formant des clefs 24, 26, 28 alternant avec des voûtes 25, 27, 29, tel que cela a été décrit plus haut, l'étape (S6) de démoulage comprend d'abord une première sous-étape de retrait de la couronne centrale 21, au cours de laquelle on retire radialement les clefs 24 de la couronne centrale, puis les voûtes 25 de la couronne centrale, afin de libérer les oreilles 22, 23, et qu'on se retrouve donc dans une configuration dans laquelle les secteurs 26, 27, 28, 29 des oreilles 22, 23 sont accessibles par l'intérieur du bandage 2 tel que cela est illustré sur les figures 20A et 22A, puis une seconde sous-étape d'extraction d'une première oreille 22 au cours de laquelle on extrait les clefs 26 de l'une 22 des oreilles gauche et droite hors de la cavité 9 du bandage 2, puis on extrait les voûtes 27 de ladite oreille 22 hors de la cavité 9 du bandage, afin de libérer la portion de cavité 9 correspondante et les haubans 16 qui se trouvent dans ladite portion de cavité 9 correspondante, ici donc les haubans 16 qui occupent le premier hémisphère du bandage 2, et une troisième sous-étape d'extraction de l'autre oreille 23 au cours de laquelle on extrait les clefs 28 de l'autre oreille 23 hors de la cavité 9 du bandage, puis on extrait les voûtes 29 de ladite autre oreille 23 hors de la cavité 9 du bandage, afin de libérer la portion de cavité 9 correspondante et les haubans 16 qui se trouvent dans ladite portion de cavité 9 correspondante, ici les haubans qui se trouvent dans le second hémisphère du bandage 2.

On notera que l'on pourra éventuellement adapter légèrement l'ordre d'extraction des secteurs des oreilles 22, 23, la seule nécessité étant, au sein d'une oreille donnée, d'extraire d'abord les deux clefs d'oreille 26, 28 qui bordent une voûte d'oreille 27, 29 avant de pouvoir extraire à son tour ladite voûte d'oreille 27, 29. Ainsi, par exemple, on pourra envisager d'extraire tout d'abord les clefs 26 de la première oreille 22, puis les voûtes 27 de ladite première oreille 22, avant de débuter l'extraction des clefs 28 de la seconde oreille 23 et de poursuivre par l'extraction des voûtes 29 de ladite seconde oreille, ou bien encore d'extraire tout d'abord les clefs 26 de la première oreille 22, puis les clefs 28 de la seconde oreille 23, puis les voûtes 27 de la première oreille 22 et enfin les voûtes 29 de la seconde oreille 23, ou bien encore, au sein d'une même oreille, d'extraire progressivement en azimut autour de l'axe central Z10, pas par pas, une première clef d'oreille 26, puis la clef d'oreille située de l'autre côté de la voûte d'oreille 27 correspondante, puis ladite voûte d'oreille 27 ainsi libérée, puis la clef d'oreille 26 immédiatement suivante, puis la seconde voûte d'oreille 27 ainsi libérée, etc.

L'extraction des secteurs 26, 27, 28, 29 de chaque oreille 22, 23 est effectuée suivant un mouvement d'extraction qui dépend de l'agencement des parois latérales des rainures, à savoir :
i) selon un mouvement d'extraction en translation axiale M_A, si les parois latérales des rainures 15 sont générées en suivant une direction génératrice axiale DG_A parallèle à l'axe central Z10, tel que cela est illustré sur les figures 20B, 20C et 21A ; de préférence ledit mouvement d'extraction en translation axiale M_A peut être suivi d'un mouvement de basculement M_B en tangage autour d'un axe normal au plan méridien sagittal P_MER_26, P_MER_27 du secteur 26, 27, 28, 29 considéré, tel que cela est illustré sur les figures 20D, 20E, 21B et 21C, notamment si la distance qui sépare axialement les oreilles 22, 23 est, en raison des dimensions du bandage 2 fabriqué, inférieure à la longueur axiale hors-tout du secteur 26, 27, 28, 29 dont on procède à l'extraction ; ce basculement M_B en tangage est facilité par le fait que la face inférieure, radialement interne, de l'oreille 23 opposée à l'oreille 22 en cours de démontage, forme une rampe conjuguée à celle de la face de dépouille 32 correspondante de la couronne centrale 21, et offre donc un dégagement correspondant une fois la couronne centrale 21 retirée ;
ii) ou selon un mouvement de translation centripète oblique M_O, comprenant simultanément une composante axiale et une composante radiale, tel que cela est illustré sur les figures 22A, 22B et 22C, si les parois latérales des rainures 15 sont générées en suivant une direction génératrice oblique DG_O qui coupe l'axe central Z10 selon un angle de colatitude A44 aigu non nul. Ledit mouvement de translation oblique M_O est avantageusement porté par ladite direction génératrice oblique DG_O.

On remarquera que, dans le premier cas i) ci-dessus, l'extraction en translation axiale M_A est notamment nécessaire pour permettre de dégager suffisamment le lobe de l'oreille 22, 23 du creux de la cavité 9, et notamment du rebord interne du bourrelet A, 5, pour qu'il soit ensuite possible d'exécuter le mouvement de basculement en tangage M_B sans forcer le bourrelet 4, 5 à s'écarter du sommet 3, et donc sans forcer sur les haubans 16.

On notera également que les inventeurs ont constatés que, sans doute en raison de la température résiduelle du noyau 10, et surtout du bandage 2, au moment de l'extraction du noyau 10 après cuisson, température résiduelle qui peut être comprise entre 50°C et 70°C, les haubans 16 présentent encore un caractère relativement lâche, c'est-à-dire ne sont pas (pas encore) complétement tendus, ce qui facilite une extraction sans dommage pour lesdits haubans 16.

Quelle que soit la trajectoire initialement empruntée pour le mouvement d'extraction M_A, M_O, une fois le secteur d'oreille 26, 27, 28, 29 dégagé des haubans 16, la séquence d'extraction dudit secteur d'oreille 26, 27, 28, 29 peut s'achever librement par l'intérieur du bandage 2, par exemple en suivant, tel que cela est illustré sur la figure 20F, un mouvement radial qui rapproche le secteur 26, 27, 28, 29 concerné de l'axe central Z10, pour franchir radialement le seuil formé par le bourrelet 4, 5, suivi d'un mouvement axial qui fait sortir complètement ledit secteur 26, 27, 28, 29 hors de l'enveloppe que délimite axialement le bandage 2.

Une fois extraits les secteurs 26, 27 d'une oreille 22, ou après que l'on a dégagé chacune des oreilles 22, 23 hors de la cavité 9 du bandage 2, les coques 61 correspondantes peuvent être extraites à leur tour, individuellement, par rotation et basculement afin de faire glisser par la tranche lesdites coques 61 entre deux haubans 16 (une branche de la coque après l'autre). De même, les bandeaux de masquage 63 peuvent être extraits par un glissement spiral qui les fait passer dans l'espace compris entre deux haubans 16 successifs.

## Revendications

1. Outillage (1) destiné à la fabrication d'un bandage (2) toroïdal comprenant un sommet (3) destiné à former une bande de roulement, un premier bourrelet (4) annulaire et un second bourrelet (5) annulaire conçus pour permettre l'accrochage du bandage (2) sur un support de montage tel qu'une jante, ainsi qu'un premier flanc (6) et un second flanc (7) qui relient le sommet (3) respectivement au premier bourrelet (4) et au second bourrelet (5), le sommet (3), les premier et second flancs (6, 7) et les premier et second bourrelets (4, 5) formant dans leur ensemble une paroi (8) présentant une surface interne (8_in) concave qui délimite une cavité (9) du bandage (2), ledit outillage (1) comprenant un noyau (10) toroïdal présentant, autour de son axe central (Z10), une surface externe convexe dite « surface de réception » (10_out) qui possède une forme conjuguée à la surface interne (8_in) de la paroi (8) du bandage et qui comprend à cet effet une zone sommitale (11), radialement externe, destinée à recevoir des composants constitutifs du sommet (3) du bandage (2), et, de part et d'autre axialement de ladite zone sommitale (11), une première zone latérale (12) rabattue vers l'axe central (Z10) et destinée à recevoir des composants constitutifs du premier flanc (6) et du premier bourrelet (4) ainsi qu'une seconde zone latérale (13) rabattue vers l'axe central (Z10) et destinée à recevoir des composants constitutifs du second flanc (7) et du second bourrelet (5), de sorte que le noyau (10) matérialise un volume, dit « volume réservé », qui est délimité extérieurement par la surface de réception (10_out) et qui correspond à la cavité (9) du bandage, l'outillage (1) étant **caractérisé en ce que** le noyau (10) possède une pluralité de passages (15) qui s'étendent à l'intérieur du volume réservé, sous la surface de réception (10_out), et qui s'ouvrent sur ladite surface de réception (10_out) de manière que chacun desdits passages (15) relie la zone sommitale (11) de la surface de réception à l'une des première et seconde zones latérales (12, 13) afin que le noyau (10) puisse recevoir, à l'intérieur desdits passages (15), des éléments de renfort, dits « haubans » (16), qui sont conçus pour intégrer à demeure la structure du bandage (2) et s'étendre chacun dans la cavité (9) du bandage en reliant un point d'ancrage sommital (17) situé dans le sommet (3) du bandage à un point d'ancrage latéral (18) situé dans l'un des flancs (6, 7) ou des bourrelets (4, 5) du bandage.

2. Outillage selon la revendication 1 **caractérisé en ce que** les passages (15) pour haubans (16) sont formés par des rainures (15), de préférence borgnes, qui sont creusées depuis la surface de réception (10_out) dans l'épaisseur du volume réservé de sorte à présenter une ouverture continue le long du profil de la surface de réception (10_out), depuis la zone sommitale (11) jusqu'à la zone latérale (12, 13) concernée.

3. Outillage selon la revendication 2 **caractérisé en ce que** le noyau (10) comprend un assemblage de plusieurs sous-ensembles (21, 22, 23) annulaires comportant :
i) un premier sous-ensemble (21) annulaire dit « couronne centrale » (21), qui forme une portion centrale de la zone sommitale (11) de la surface de réception (10_out) destinée à recevoir un ou des composants constitutifs du sommet (3) du bandage (2), ladite couronne centrale (21) étant de préférence dépourvue de passages (15) pour haubans (16),
ii) un second sous-ensemble (22) annulaire dit « oreille gauche » (22) qui est accolé axialement à la couronne centrale (21), ladite oreille gauche (22) comprenant la première zone latérale (12) de la surface de réception (10_out) ainsi qu'une portion de la zone sommitale (11) qui prolonge axialement la portion centrale de la zone sommitale (11) du côté correspondant de la couronne centrale (21), et ladite oreille gauche (22) contenant les rainures (15) formant les passages destinés aux haubans (16) qui relient le premier flanc (6) du bandage au sommet (3) du bandage, et
iii) un troisième sous-ensemble (23) annulaire dit « oreille droite » (23) qui est accolé axialement à la couronne centrale (21), du côté de la couronne centrale qui est axialement opposé au côté recevant l'oreille gauche (22), ladite oreille droite (23) comprenant la seconde zone latérale (13) de la surface de réception (10_out) ainsi qu'une portion de la zone sommitale (11) qui prolonge axialement la portion centrale de la zone sommitale (11) du côté correspondant de la couronne centrale (21), et ladite oreille droite (23) contenant les rainures (15) formant les passages destinés aux haubans (16) qui relient le second flanc (7) du bandage au sommet (3) du bandage,
et **en ce que** lesdits sous-ensembles (21, 22, 23) annulaires, à savoir la couronne centrale (21), l'oreille gauche (22), et l'oreille droite (23), sont chacun fractionnés angulairement en secteurs (24, 25, 26, 27, 28, 29), en azimut autour de l'axe central (Z10), selon une alternance de secteurs dits « clefs » (24, 26, 28), conçus pour être accessibles par abord radialement interne et pour être retirés en premier lors du désassemblage du sous-ensemble (21, 22, 23) considéré, et de secteurs dits « voûtes » (25, 27, 29), soutenus et bloqués en position par les clefs (24, 26, 28), et conçus pour devenir manœuvrables après qu'ils ont été libérés par le retrait des clefs (24, 26, 28).

4. Outillage selon la revendication 3 **caractérisé en ce que** les flancs (40, 41) d'au moins une clef d'oreille (26, 28) qui délimitent le secteur angulaire (A26) occupé en azimut par ladite clef d'oreille autour de l'axe central (Z10) et qui forment ainsi les plans de joints (PJ) selon lesquels ladite clef d'oreille (26, 28) vient coopérer avec les voûtes d'oreille (27, 29) adjacentes à ladite clef d'oreille (26, 28) au sein du sous-ensemble annulaire (22), sont parallèles à un plan fictif dit « plan méridien sagittal » (P_MER_26), qui correspond au plan radial qui contient l'axe central (Z10) et qui coupe le secteur angulaire (A26) occupé par la clef d'oreille (26, 28) considérée en son milieu, de sorte que lesdits flancs (40, 41) autorisent une extraction de la clef d'oreille (26, 28) hors des voûtes d'oreilles (27, 29) qui lui sont adjacentes par glissement et/ou basculement le long desdits plans de joints (PJ).

5. Outillage selon l'une des revendications 3 et 4 **caractérisé en ce que** les rainures (15) d'un même secteur d'oreille (26, 27, 28, 29) sont délimitées chacune par deux parois latérales qui sont générées en suivant une direction génératrice axiale (DG_A) parallèle à l'axe central (Z10), ou bien qui forment des faces de dépouilles qui vont en s'évasant depuis le fond (19) de la rainure jusqu'à la surface de réception (10_out) de sorte à dégager, dans tout l'intérieur de la rainure (15) concernée, un espace libre qui contient un volume fictif dit « volume gabarit nécessaire » généré en exécutant un balayage virtuel du hauban (16) concerné selon une trajectoire virtuelle de sortie portée par une direction génératrice axiale (DG_A) parallèle à l'axe central (Z10), de sorte que lesdites rainures (15) autorisent une extraction axiale du secteur d'oreille (26, 27, 28, 29) concerné, selon un mouvement d'extraction axial (M_A) parallèle à l'axe central (Z10) et dirigé vers le plan équatorial (P_EQ) du noyau (10), sans que les parois latérales desdites rainures (15) n'interfèrent avec les haubans (16) lors dudit mouvement d'extraction axial (M_A).

6. Outillage selon l'une des revendications 2 à 5 **caractérisé en ce que** les rainures (15) sont générées suivant des plans radiaux contenant l'axe central (Z10), de sorte à permettre la mise en place au sein du bandage (2) de haubans (16) s'étendant selon lesdits plans radiaux.

7. Outillage selon l'une des revendications 2 à 5 **caractérisé en ce que** les rainures (15) s'entrecroisent de sorte à dessiner un quadrillage sur la surface de réception (10_out), afin de permettre la mise en place de haubans (16) croisés au sein du bandage (2).

8. Outillage selon la revendication 7 et la revendication 3 **caractérisé en ce que** les rainures (15) entrecroisées d'un même secteur d'oreille (26, 27, 28, 29) sont délimitées chacune par deux parois latérales qui sont générées en suivant une direction génératrice oblique (DG_O), qui est contenue dans le plan radial qui coupe le secteur d'oreille considéré en son milieu, dit « plan méridien sagittal » (P_MER_26, P_MER_27), et qui, dans ledit plan méridien sagittal, converge vers l'axe central (Z10) dans le sens allant de l'oreille (22, 23) concernée vers l'oreille (23, 22) opposée, et forme avec l'axe central (Z10) un angle, dit « angle de colatitude » (A44), qui est non nul et strictement inférieur à 90 degrés, de préférence compris entre 30 degrés et 50 degrés, par exemple compris entre 40 degrés et 47 degrés.

9. Outillage selon la revendication 8 **caractérisé en ce que** les flancs (40, 41), et donc les plans de joint (PJ), qui délimitent la clef d'oreille (26, 28) concernée sont générés en suivant la direction génératrice oblique (DG_O) à partir d'un profil de base (45) qui correspond i) soit, selon une première possibilité, à l'intersection (46) de la surface de réception (10_out) avec un plan radial (P1, P2) qui est décalé angulairement en azimut par rapport au plan méridien sagittal (P_MER_26) de ladite clef d'oreille (26, 28) d'une valeur telle que le profil de base (45) passe par les sommets opposés des motifs du quadrillage, de préférence des quadrilatères, qui sont définis sur la surface de réception par les rainures (15) entrecroisées et qui se succèdent depuis la zone sommitale (11) jusqu'à la zone latérale (12, 13) le long dudit profil de base (45), ii) soit, selon une seconde possibilité, à la ligne brisée (47) en zigzag formée, sur la surface de réception (10_out), par l'alternance des côtés des motifs du quadrillage, de préférence des quadrilatères, qui sont définis sur la surface de réception par les rainures (15) entrecroisées et qui se succèdent depuis la zone sommitale (11) jusqu'à la zone latérale (12, 13).

10. Outillage selon l'une des revendications précédentes **caractérisé en ce que** les passages (15) pour les haubans (16) sont délimités par des parois latérales, et **en ce que** le noyau (10) présente, au dos desdites parois latérales, sous la surface de réception (10_out), et pénétrant entre les passages (15), des évidements (50) qui sont distincts des passages (15) et séparés desdits passages (15) par les parois latérales.

11. Outillage selon l'une des revendications précédentes **caractérisé en ce qu'**il comprend un dispositif anti-pénétration (60) qui coopère avec le noyau (10) pour faire obstacle à une pénétration des composants constitutifs du sommet (3), des flancs (6, 7) ou des bourrelets (4, 5) du bandage dans les passages (15) du noyau (10) dans lesquels sont engagés les haubans (16).

12. Procédé de fabrication d'un bandage (2) toroïdal comprenant un sommet (3) destiné à former une bande de roulement, un premier bourrelet (4) annulaire et un second bourrelet (5) annulaire conçus pour permettre l'accrochage du bandage (2) sur un support de montage tel qu'une jante, ainsi qu'un premier flanc (6) et un second flanc (7) qui relient le sommet (3) respectivement au premier bourrelet (4) et au second bourrelet (5), le sommet (3), les premier et second flancs (6, 7) et les premier et second bourrelets (4, 5) formant dans leur ensemble une paroi (8) présentant une surface interne (8_in) concave qui délimite une cavité (9) du bandage, ledit bandage (2) comprenant des éléments de renfort (16), dits « haubans » (16), qui s'étendent chacun dans la cavité (9) du bandage en reliant un point d'ancrage sommital (17) situé dans le sommet (3) du bandage à un point d'ancrage latéral (18) situé dans l'un des flancs (6, 7) ou des bourrelets (4, 5) du bandage, ledit procédé comprenant une étape (S0) de préparation, au cours de laquelle on prépare un outillage (1) selon l'une quelconque des revendications 1 à 11, une étape (S2) de mise en place de haubans (16), au cours de laquelle on passe un fil de renfort (70), destiné à former un hauban (16), à travers chaque passage (15) du noyau (10), de préférence en utilisant un fil de renfort (70) continu que l'on dispose en serpentin à travers les passages (15) successifs en faisant aller puis revenir d'un seul tenant ledit fil de renfort (70) continu d'une zone latérale (12) du noyau (10) à l'autre zone latérale (13) en passant par la zone sommitale (11), puis une étape (S4) de garnissage au cours de laquelle on dépose sur la surface de réception (10_out) les composants constitutifs du sommet (3), des flancs (6, 7) et des bourrelets (4, 5) du bandage, de préférence par enroulement desdits composants sur le noyau (10) mis en rotation, afin de construire la paroi (8) du bandage (2), puis une étape (S5) de cuisson, puis une étape (S6) de démoulage au cours de laquelle on dégage le noyau (10) du bandage (2) en laissant les haubans (16) en place dans la cavité (9) dudit bandage (2).

13. Procédé selon la revendication 12 **caractérisé en ce que**, suite à l'étape (S0) de préparation, et avant l'étape (S2) de mise en place de haubans (16), ledit procédé comprend une étape (S1) de pré-garnissage au cours de laquelle on pose sur les zones latérales (12, 13) et sur la zone sommitale (11) de la surface de réception (10_out) du noyau, en vis-à-vis des points d'ancrage (18, 17) prévus pour attacher les haubans à la paroi (8) du bandage, des structures d'ancrage (71, 72) qui sont conçues pour recueillir les extrémités des haubans (16) qui émergent des passages (15) du noyau et pour venir adhérer aux composants constitutifs des flancs (6, 7) ou des bourrelets (4, 5), respectivement du sommet (3), en prenant en sandwich lesdites extrémités des haubans (16) entre les structures d'ancrage (71, 72) et lesdits composants, afin d'assurer la fixation des haubans (16) aux points d'ancrage (18, 17) prévus.

14. Procédé selon la revendication 12 ou 13 **caractérisé en ce que**, le noyau (10) comprenant d'une part une couronne centrale (21), et d'autre part une oreille gauche (22) et une oreille droite (23) contenant les passages (15) de haubans (16) sous forme de rainures (15) qui sont ouvertes sur la surface de réception (10_out), chacune desdites couronne centrale (21) et oreilles (22, 23) étant fractionnée angulairement en secteurs formant des clefs (24, 26, 28) alternant avec des voûtes (25, 27, 29), l'étape (S6) de démoulage comprend d'abord une première sous-étape de retrait de la couronne centrale (21), au cours de laquelle on retire radialement les clefs (24) de la couronne centrale, puis les voûtes (25) de la couronne centrale, afin de libérer les oreilles (22, 23), puis une seconde sous-étape d'extraction d'une première oreille (22) au cours de laquelle on extrait les clefs (26) de l'une (22) des oreilles gauche et droite hors de la cavité (9) du bandage, puis on extrait les voûtes (27) de ladite oreille hors de la cavité (9) du bandage, afin de libérer la portion de cavité correspondante et les haubans (16) qui se trouvent dans ladite portion de cavité correspondante, et une troisième sous-étape d'extraction de l'autre oreille (23) au cours de laquelle on extrait les clefs (28) de l'autre oreille hors de la cavité (9) du bandage, puis on extrait les voûtes (29) de ladite autre oreille hors de la cavité (9) du bandage, afin de libérer la portion de cavité correspondante et les haubans (16) qui se trouvent dans ladite portion de cavité correspondante, et **en ce que** l'extraction des secteurs (26, 27, 28, 29) de chaque oreille est effectuée suivant un mouvement d'extraction qui dépend de l'agencement des parois latérales des rainures (15), à savoir
i) selon un mouvement d'extraction en translation axiale (M_A), de préférence suivi d'un mouvement de basculement (M_B) en tangage autour d'un axe normal au plan méridien sagittal (P_MER_26, P_MER_27) du secteur (26, 27, 28, 29) considéré, si les parois latérales des rainures (15) sont générées en suivant une direction génératrice axiale (DG_A) parallèle à l'axe central (Z10), ou
ii) selon un mouvement de translation centripète oblique (M_O), comprenant simultanément une composante axiale et une composante radiale, si les parois latérales des rainures (15) sont générées en suivant une direction génératrice oblique (DG_O) qui coupe l'axe central (Z10) selon un angle de colatitude (A44) aigu non nul.

15. Procédé selon l'une des revendications 12 à 14 **caractérisé en ce que**, postérieurement à l'étape (S2) de mise en place de haubans (16), ledit procédé comprend une étape (S3) de protection, au cours de laquelle on met en œuvre un dispositif anti-pénétration (60) qui, pendant l'étape (S4) de garnissage et pendant l'étape (S5) de cuisson, coopère avec le noyau (10) pour faire obstacle à une pénétration des composants constitutifs du sommet (3), des flancs (6, 7) ou des bourrelets (4, 5) du bandage (2) dans les passages (15) du noyau (10) dans lesquels sont engagés les haubans (16), par exemple en appliquant sur la surface de réception, avant l'étape (S4) de garnissage, des éléments de masquage (61, 63), du genre coques (61) et/ou bandeaux de masquage (63), qui viennent recouvrir les passages (15) et ainsi faire écran entre lesdits passages (15) et les composants de la paroi (8) du bandage, ou bien en utilisant un élément de comblement (65) qui remplit provisoirement, au moins pendant l'étape (S5) de cuisson, le volume de chaque passage (15) qui est laissé libre entre le hauban (16) engagé dans ledit passage (15) et la ou les ouvertures dudit passage (15) qui débouchent sur la surface de réception (10_out).

## Patentansprüche

1. Werkzeug (1) zur Herstellung eines toroidalen Reifens (2) mit einem Scheitel (3), der dazu bestimmt ist, einen Laufstreifen zu bilden, einem ersten ringförmigen Wulst (4) und einem zweiten ringförmigen Wulst (5), die dazu bestimmt sind, das Einhaken des Reifens (2) auf einem Montageträger wie einer Felge zu ermöglichen, sowie einer ersten Flanke (6) und einer zweiten Flanke (7), die den Scheitel (3) jeweils mit dem ersten Wulst (4) und dem zweiten Wulst (5) verbinden, wobei der Scheitel (3), die erste und zweite Flanke (6, 7) und der erste und zweite Wulst (4, 5) in ihrer Gesamtheit eine Wand (8) mit einer konkaven Innenfläche (8_in) bilden, die einen Hohlraum (9) des Reifens (2) begrenzt, wobei das Werkzeug (1) einen ringförmigen Kern (10) aufweist, der um seine zentrale Achse (Z10) eine konvexe Außenfläche, genannt "Aufnahmefläche" (10_out), aufweist, die eine zur Innenfläche (8_in) der Wand (8) des Reifens konjugierte Form besitzt und die zu diesem Zweck einen radial äußeren Scheitelbereich (11) aufweist, der dazu bestimmt ist, Komponenten aufzunehmen, die den Scheitel (3) des Reifens (2) bilden, und zu beiden Seiten axial des Scheitelbereichs (11) einen ersten Seitenbereich (12), der zur zentralen Achse (Z10) hin umgeschlagen ist und dazu bestimmt ist, die Bestandteile aufzunehmen, die die erste Flanke (6) und den ersten Wulst (4) bilden, sowie einen zweiten Seitenbereich (13), der zur Mittelachse (Z10) hin umgeschlagen ist und dazu bestimmt ist, die Bestandteile aufzunehmen, die die zweite Flanke (7) und den zweiten Wulst (5) bilden, so dass der Kern (10) ein Volumen materialisiert, genannt "reserviertes Volumen", das außen von der Aufnahmefläche (10_out) begrenzt wird und dem Hohlraum (9) des Reifens entspricht, wobei das Werkzeug (1) **dadurch gekennzeichnet ist, dass** der Kern (10) eine Vielzahl von Durchgängen (15) aufweist, die sich unter der Aufnahmefläche (10_out) innerhalb des reservierten Volumens erstrecken und die sich zu der Aufnahmefläche (10_out) hin öffnen, so dass jeder der Durchgänge (15) den Scheitelbereich (11) der Aufnahmefläche mit einem des ersten und zweiten Seitenbereichs (12, 13) verbindet, so dass der Kern (10) im Inneren der Durchgänge (15) Verstärkungselemente, genannt "Abspannungen" (16), aufnehmen kann, die so gestaltet sind, dass sie die Struktur des Reifens (2) fest integrieren und sich jeweils in den Hohlraum (9) des Reifens erstrecken, indem sie einen im Scheitel (3) des Reifens liegenden Scheitelverankerungspunkt (17) mit einem in einer der Flanken (6, 7) oder der Wülste (4, 5) des Reifens liegenden seitlichen Verankerungspunkt (18) verbinden.

2. Werkzeug nach Anspruch 1, **dadurch gekennzeichnet, dass** die Durchgänge (15) für Abspannungen (16) durch Nuten (15), vorzugsweise Blindnuten, gebildet werden, die von der Aufnahmefläche (10_out) aus in die Dicke des reservierten Volumens gezogen werden, so dass sie eine durchgehende Öffnung entlang des Profils der Aufnahmefläche (10_out) vom Scheitelbereich (11) bis zum betreffenden Seitenbereich (12, 13) aufweisen.

3. Werkzeug nach Anspruch 2, **dadurch gekennzeichnet, dass** der Kern (10) einen Zusammenbau aus mehreren ringförmigen Unterbaugruppen (21, 22, 23) aufweist, die Folgendes aufweisen:
i) eine erste ringförmige Unterbaugruppe (21), genannt "zentraler Kranz" (21), die einen zentralen Abschnitt des Scheitelbereichs (11) der Aufnahmefläche (10_out) bildet, die dazu bestimmt ist, eine oder mehrere Komponenten aufzunehmen, die den Scheitel (3) des Reifens (2) bilden, wobei der zentrale Kranz (21) vorzugsweise keine Durchgänge (15) für Abspannungen (16) aufweist,
ii) eine zweite ringförmige Unterbaugruppe (22), genannt "linkes Ohr" (22), die axial an den zentralen Kranz (21) angefügt ist, wobei das linke Ohr (22) den ersten Seitenbereich (12) der Aufnahmefläche (10_out) sowie einen Abschnitt des Scheitelbereichs (11) aufweist, der den zentralen Abschnitt des Scheitelbereichs (11) auf der entsprechenden Seite des zentralen Kranzes (21) axial verlängert, und das linke Ohr (22) die Nuten (15) enthält, die die Durchgänge für die Abspannungen (16) bilden, die die erste Flanke (6) des Reifens mit dem Scheitel (3) des Reifens verbinden, und
iii) eine dritte ringförmige Unterbaugruppe (23), genannt "rechtes Ohr" (23), die axial an den zentralen Kranz (21) angefügt ist, und zwar auf der Seite des zentralen Kranzes, die der Seite, die das linke Ohr (22) aufnimmt, axial gegenüberliegt, wobei das rechte Ohr (23) den zweiten Seitenbereich (13) der Aufnahmefläche (10_out) sowie einen Abschnitt des Scheitelbereichs (11) aufweist, der den zentralen Abschnitt des Scheitelbereichs (11) auf der entsprechenden Seite des zentralen Kranzes (21) axial verlängert, und das rechte Ohr (23) die Nuten (15) enthält, die die Durchgänge für die Abspannungen (16) bilden, die die zweite Flanke (7) Reifens mit dem Scheitel (3) des Reifens verbinden,
und dass die ringförmigen Unterbaugruppen (21, 22, 23), nämlich der zentrale Kranz (21), das linke Ohr (22) und das rechte Ohr (23), jeweils winkelmäßig in Sektoren (24, 25, 26, 27, 28, 29) unterteilt sind, im Azimut um die zentrale Achse (Z10) herum, gemäß einer Abwechslung von Sektoren, genannt "Schlüssel" (24, 26, 28), die so gestaltet sind, dass sie von radial innen zugänglich sind und beim Zerlegen der betrachteten Unterbaugruppe (21, 22, 23) zuerst entfernt werden, und von Sektoren, genannt "Gewölbe" (25, 27, 29), die von den Schlüsseln (24, 26, 28) gestützt und in ihrer Position blockiert werden und so gestaltet sind, dass sie gehandhabt werden können, nachdem sie durch das Zurückziehen der Schlüssel (24, 26, 28) freigegeben wurden.

4. Werkzeug nach Anspruch 3, **dadurch gekennzeichnet, dass** die Flanken (40, 41) mindestens eines Ohrschlüssels (26, 28), die den Winkelsektor (A26) begrenzen, der im Azimut von dem Ohrschlüssel um die zentrale Achse (Z10) eingenommen wird, und die somit die Verbindungsebenen (PJ) bilden, gemäß denen der Ohrschlüssel (26, 28) mit den an den Ohrschlüssel (26, 28) angrenzenden Ohrwölbungen (27, 29) innerhalb der ringförmigen Unterbaugruppen (22) zusammenwirken, parallel zu einer fiktiven Ebene, genannt "sagittale Meridianebene" (P_MER_26), verlaufen, die der radialen Ebene entspricht, welche die zentrale Achse (Z10) enthält und den Winkelsektor (A26), der von dem Ohrschlüssel (26, 28) in seiner Mitte betrachtet eingenommen wird, schneidet, so dass die Flanken (40, 41) ein Entnehmen des Ohrschlüssels (26, 28) aus den an ihn angrenzenden Ohrgewölben (27, 29) durch Gleiten und/oder Kippen entlang der Verbindungsebenen (PJ) erlauben.

5. Werkzeug nach einem der Ansprüche 3 und 4, **dadurch gekennzeichnet, dass** die Nuten (15) desselben Ohrsektors (26, 27, 28, 29) jeweils von zwei Seitenwänden begrenzt werden, die entlang einer axialen Erzeugungsrichtung (DG_A) parallel zur zentralen Achse (Z10) erzeugt werden, oder die Freiflächen bilden, die sich vom Boden (19) der Nut bis zur Aufnahmefläche (10_out) aufweiten, so dass im gesamten Inneren der betreffenden Nut (15) ein Freiraum geschaffen wird, der ein fiktives Volumen, genannt "notwendiges Maßvolumen", enthält, das durch Ausführen einer virtuellen Abtastung der betreffenden Abspannung (16) entlang einer virtuellen Austrittsbahn erzeugt wird, die von einer zur zentralen Achse (Z10) parallelen axialen Erzeugungsrichtung (DG_A) getragen wird, so dass die Nuten (15) ein axiales Entnehmen des betreffenden Ohrsektors (26, 27, 28, 29) gemäß einer axialen Entnahmebewegung (M_A) parallel zur zentralen Achse (Z10) und in Richtung der Äquatorialebene (P_EQ) des Kerns (10) gerichtet erlauben, ohne dass die Seitenwände der Nuten (15) während der axialen Entnahmebewegung (M_A) mit den Abspannungen (16) interferieren.

6. Werkzeug nach einem der Ansprüche 2 bis 5, **dadurch gekennzeichnet, dass** die Nuten (15) entlang radialer Ebenen erzeugt werden, die die zentrale Achse (Z10) enthalten, so dass innerhalb des Reifens (2) Abspannungen (16) angebracht werden können, die sich entlang der radialen Ebenen erstrecken.

7. Werkzeug nach einem der Ansprüche 2 bis 5, **dadurch gekennzeichnet, dass** sich die Nuten (15) so kreuzen, dass sie ein Gitter auf der Aufnahmefläche (10_out) zeichnen, um das Anbringen von gekreuzten Abspannungen (16) innerhalb des Reifens (2) zu ermöglichen.

8. Werkzeug nach Anspruch 7 und Anspruch 3, **dadurch gekennzeichnet, dass** die sich kreuzenden Nuten (15) ein und desselben Ohrsektors (26, 27, 28, 29) jeweils durch zwei Seitenwände begrenzt sind, die entlang einer schrägen Erzeugungsrichtung (DG_O) erzeugt werden, die in der radialen Ebene enthalten ist, die den betreffenden Ohrsektor in seiner Mitte betrachtet schneidet, genannt "sagittale Meridianebene" (P_MER_26, P_MER_27), und die in der sagittalen Meridianebene in Richtung der zentralen Achse (Z10) in der Richtung vom betreffenden Ohr (22, 23) zum gegenüberliegenden Ohr (23, 22) konvergiert und mit der zentralen Achse (Z10) einen Winkel, genannt "Kobreitenwinkel" (A44), bildet, der ungleich Null und strikt kleiner als 90 Grad ist, vorzugsweise zwischen 30 Grad und 50 Grad, beispielsweise zwischen 40 Grad und 47 Grad.

9. Werkzeug nach Anspruch 8, **dadurch gekennzeichnet, dass** die Flanken (40, 41) und damit die Verbindungsebenen (PJ), die den betreffenden Ohrschlüssel (26, 28) begrenzen, entlang der schrägen Erzeugungsrichtung (DG_O) aus einem Basisprofil (45) erzeugt werden, das Folgendem entspricht: i) entweder, gemäß einer ersten Möglichkeit, am Schnittpunkt (46) der Aufnahmefläche (10_out) mit einer radialen Ebene (P1, P2), die im Azimut winkelmäßig gegenüber der sagittalen Meridianebene (P_MER_26) des Ohrschlüssels (26, 28) um einen solchen Betrag versetzt ist, dass das Basisprofil (45) durch die gegenüberliegenden Scheitel der Gittermuster, vorzugsweise Vierecke, verläuft, die auf der Aufnahmefläche durch die sich kreuzenden Nuten (15) definiert sind und die vom Scheitelbereich (11) zum Seitenbereich (12, 13) entlang des Basisprofils (45) aufeinander folgen, ii) oder, gemäß einer zweiten Möglichkeit, an der gebrochenen Zickzacklinie (47), die auf der Aufnahmefläche (10_out) durch die abwechselnden Seiten des Gittermusters, vorzugsweise der Vierecke, gebildet wird, die auf der Aufnahmefläche durch die sich kreuzenden Nuten (15) definiert sind und die vom Scheitelbereich (11) bis zum Seitenbereich (12, 13) aufeinander folgen.

10. Werkzeug nach einem der vorhergehenden Ansprüche, **dadurch gekennzeichnet, dass** die Durchgänge (15) für die Abspannungen (16) durch Seitenwände begrenzt sind und dass der Kern (10) auf der Rückseite der Seitenwände unter der Aufnahmefläche (10_out) und zwischen den Durchgängen (15) eindringend Aussparungen (50) aufweist, die von den Durchgängen (15) verschieden sind und von den Durchgängen (15) durch die Seitenwände getrennt sind.

11. Werkzeug nach einem der vorhergehenden Ansprüche, **dadurch gekennzeichnet, dass** es eine Eindringschutzvorrichtung (60) aufweist, die mit dem Kern (10) zusammenwirkt, um ein Eindringen der Bestandteile, die den Scheitel (3), die Flanken (6, 7) oder die Wülste (4, 5) des Reifens bilden, in die Durchgänge (15) des Kerns (10), in die die Abspannungen (16) eingreifen, zu verhindern.

12. Verfahren zur Herstellung eines toroidalen Reifens (2) mit einem Scheitel (3), der dazu bestimmt ist, einen Laufstreifen zu bilden, einem ersten ringförmigen Wulst (4) und einem zweiten ringförmigen Wulst (5), die dazu bestimmt sind, das Einhaken des Reifens (2) auf einem Montageträger wie einer Felge zu ermöglichen, sowie einer ersten Flanke (6) und einer zweiten Flanke (7), die den Scheitel (3) jeweils mit dem ersten Wulst (4) und dem zweiten Wulst (5) verbinden, wobei der Scheitel (3), die erste und zweite Flanke (6, 7) und der erste und zweite Wulst (4, 5) in ihrer Gesamtheit eine Wand (8) mit einer konkaven Innenfläche (8_in) bilden, die einen Hohlraum (9) des Reifens begrenzt, wobei der Reifen (2) Verstärkungselemente (16), genannt "Abspannungen" (16), aufweist, die sich jeweils in den Hohlraum (9) des Reifens erstrecken, indem sie einen im Scheitel (3) des Reifens liegenden Scheitelverankerungspunkt (17) mit einem in einer der Flanken (6, 7) oder der Wülste (4, 5) des Reifens liegenden seitlichen Verankerungspunkt (18) verbinden, wobei das Verfahren einen Vorbereitungsschritt (S0) aufweist, in dessen Verlauf ein Werkzeug (1) nach einem der Ansprüche 1 bis 11 vorbereitet wird, einen Schritt (S2) des Anbringens von Abspannungen (16), in dessen Verlauf ein Verstärkungsdraht (70), der dazu bestimmt ist, eine Abspannung (16) zu bilden, durch jeden Durchgang (15) des Kerns (10) geführt wird, vorzugsweise unter Verwendung eines kontinuierlichen Verstärkungsdrahts (70), der schlangenförmig durch die aufeinanderfolgenden Durchgänge (15) angeordnet werden kann, indem man den kontinuierlichen Verstärkungsdraht (70) in einem Stück von einem Seitenbereich (12) des Kerns (10) über den Scheitelbereich (11) zum anderen Seitenbereich (13) hin und wieder zurücklaufen lässt, dann einen Schritt (S4) des Vorbestückens aufweist, in dessen Verlauf auf der Aufnahmefläche (10_out) die Bestandteile aufgebracht werden, die den Scheitel (3), die Flanken (6, 7) und die Wülste (4, 5) des Reifens bilden, vorzugsweise durch Aufwickeln dieser Bestandteile auf den in Drehung versetzten Kern (10), um die Wand (8) des Reifens (2) aufzubauen, dann einen Schritt (S5) des Aushärtens, dann einen Schritt (S6) des Aus-der-Form-Nehmens, in dessen Verlauf der Kern (10) des Reifens (2) freigelegt wird, wobei die Abspannungen (16) in dem Hohlraum (9) des Reifens (2) an ihrem Platz belassen werden.

13. Verfahren nach Anspruch 12, **dadurch gekennzeichnet, dass** das Verfahren im Anschluss an den Vorbereitungsschritt (S0) und vor dem Schritt (S2) des Anbringens von Abspannungen (16) einen Vorbestückungsschritt (S1) aufweist, in dessen Verlauf auf den Seitenbereichen (12, 13) und auf dem Scheitelbereich (11) der Aufnahmefläche (10_out) des Kerns gegenüber den Verankerungspunkten (18, 17), die zum Befestigen der Abspannungen an der Wand (8) des Reifens vorgesehen sind, folgende Verankerungsstrukturen (71, 72) angebracht werden, die dazu ausgelegt sind, die Enden der Abspannungen (16), die aus den Durchgängen (15) des Kerns herausragen, aufzunehmen und an den Komponenten, die die Flanken (6, 7) oder die Wülste (4, 5) bzw. den Scheitel (3) bilden, anzuhaften, indem die Enden der Abspannungen (16) zwischen den Verankerungsstrukturen (71, 72) und den Komponenten sandwichartig angeordnet werden, um die Befestigung der Abspannungen (16) an den vorgesehenen Verankerungspunkten (18, 17) zu gewährleisten.

14. Verfahren nach Anspruch 12 oder 13, **dadurch gekennzeichnet, dass**, da der Kern (10) einerseits einen zentralen Kranz (21) und andererseits ein linkes Ohr (22) und ein rechtes Ohr (23) aufweist, die die Durchgänge (15) der Abspannungen (16) in Form von Nuten (15) enthalten, die auf der Aufnahmefläche (10_out) offen sind, der zentrale Kranz (21) und die Ohren (22, 23) winkelmäßig in Sektoren aufgeteilt sind, die Schlüssel (24, 26, 28) bilden, die sich mit Gewölben (25, 27, 29) abwechseln, wobei der Schritt (S6) des Aus-der-Form-Nehmens zunächst einen ersten Unterschritt des Entfernens des zentralen Kranzes (21) aufweist, in dessen Verlauf die Schlüssel (24) des zentralen Kranzes und dann die Gewölbe (25) des zentralen Kranzes radial entnommen werden, um die Ohren (22, 23) freizugeben, und dann einen zweiten Unterschritt zum Entnehmen eines ersten Ohrs (22), in dessen Verlauf die Schlüssel (26) des einen (22) der linken und rechten Ohren aus dem Hohlraum (9) des Reifens entnommen werden, und dann die Gewölbe (27) des einen Ohrs aus dem Hohlraum (9) des Reifens entnommen werden, um den entsprechenden Hohlraumabschnitt und die Abspannungen (16), die sich in dem entsprechenden Hohlraumabschnitt befinden, freizugeben, und ein dritter Unterschritt zum Entnehmen des anderen Ohrs (23), in dessen Verlauf die Schlüssel (28) des anderen Ohrs aus dem Hohlraum (9) des Reifens entnommen werden, und dann die Gewölbe (29) des anderen Ohrs aus dem Hohlraum (9) Reifens entnommen werden, um den entsprechenden Hohlraumabschnitt und die Abspannungen (16), die sich in dem entsprechenden Hohlraumabschnitt befinden, freizugeben, und dass das Entnehmen der Sektoren (26, 27, 28, 29) jedes Ohrs mit einer Entnahmebewegung durchgeführt wird, die von der Anordnung der Seitenwände der Nuten (15) abhängt, nämlich
i) gemäß einer axialen translatorischen Entnahmebewegung (M_A), vorzugsweise gefolgt von einer taumelnden Kippbewegung (M_B) um eine Achse normal zur sagittalen Meridianebene (P_MER_26, P_MER_27) des betrachteten Sektors (26, 27, 28, 29), wenn die Seitenwände der Nuten (15) entlang einer axialen Erzeugungsrichtung (DG_A) parallel zur zentralen Achse (Z10) erzeugt werden, oder
ii) gemäß einer schrägen zentripetalen Translationsbewegung (M_O), die gleichzeitig eine axiale und eine radiale Komponente aufweist, wenn die Seitenwände der Nuten (15) entlang einer schrägen Erzeugungsrichtung (DG_O) erzeugt werden, die die zentralen Achse (Z10) unter einem spitzen Kobreitenwinkel (A44), der nicht Null ist, schneidet.

15. Verfahren nach einem der Ansprüche 12 bis 14, **dadurch gekennzeichnet, dass** das Verfahren nach dem Schritt (S2) des Anbringens von Abspannungen (16) einen Schutzschritt (S3) aufweist, in dessen Verlauf eine Eindringschutzvorrichtung (60) eingesetzt wird, die, während des Schritts (S4) des Vorbestückens und während des Schritts (S5) des Aushärtens mit dem Kern (10) zusammenwirkt, um ein Eindringen der Bestandteil, die den Scheitel (3), die Flanken (6, 7) oder die Wülste (4, 5) des Reifens (2) bilden, in die Durchgänge (15) des Kerns (10), in die die Abspannungen (16) eingreifen, zu verhindern, beispielsweise durch Aufbringen von Maskierungselementen (61, 63) auf die Aufnahmefläche vor dem Schritt (S4) des Vorbestückens, in der Art von Maskierungsschalen (61) und/oder -bändern (63), die die Durchgänge (15) abdecken und so zwischen den Durchgängen (15) und den Bestandteilen der Wand (8) des Reifens einen Schirm bilden, oder durch Verwenden eines Füllelements (65), das zumindest während des Schritts (S5) des Aushärtens vorübergehend das Volumen jedes Durchgangs (15) ausfüllt, das zwischen der in den Durchgang (15) eingreifenden Abspannung (16) und der Öffnung oder den Öffnungen des Durchgangs (15), die in die Aufnahmefläche (10_out) münden, freigelassen wird.

## Claims

1. Tool (1) suitable for manufacturing a toroidal tyre (2) comprising a crown (3) suitable for forming a tread, a first annular bead (4) and a second annular bead (5) designed to make it possible to attach the tyre (2) to a mounting support such as a rim, together with a first sidewall (6) and a second sidewall (7) that connect the crown (3) to the first bead (4) and to the second bead (5) respectively, the crown (3), the first and second sidewalls (6, 7) and the first and second beads (4, 5) as a whole forming a wall (8) having a concave inner surface (8_in) that defines a cavity (9) of the tyre (2), said tool (1) comprising a toroidal core (10) having, about its central axis (Z10), a convex outer surface, referred to as the "receiving surface" (10_out), which has a shape conjugate to the inner surface (8_in) of the wall (8) of the tyre and which comprises to this end a radially outer crown zone (11) suitable for receiving components forming the crown (3) of the tyre (2) and, axially on either side of said crown zone (11), a first lateral zone (12) turned in towards the central axis (Z10) and suitable for receiving components forming the first sidewall (6) and the first bead (4), together with a second lateral zone (13) turned in towards the central axis (Z10) and suitable for receiving components forming the second sidewall (7) and the second bead (5), so that the core (10) embodies a volume, referred to as the "reserved volume", which is externally delimited by the receiving surface (10_out) and corresponds to the cavity (9) of the tyre, the tool (1) being **characterized in that** the core (10) has a plurality of passages (15) that extend inside the reserved volume, below the receiving surface (10_out), and which open onto said receiving surface (10_out) so that each of said passages (15) connects the crown zone (11) of the receiving surface to one of the first and second lateral zones (12, 13) so that the core (10) can receive, inside said passages (15), reinforcing elements, referred to as "stays" (16), which are designed to be permanently incorporated into the structure of the tyre (2) and each extend in the cavity (9) of the tyre, connecting a crown anchor point (17) situated in the crown (3) of the tyre to a lateral anchor point (18) situated in one of the sidewalls (6, 7) or beads (4, 5) of the tyre.

2. Tool according to Claim 1, **characterized in that** the passages (15) for stays (16) are formed by grooves (15), preferably blind, that are hollowed out from the receiving surface (10_out) in the thickness of the reserved volume so that they have a continuous opening along the profile of the receiving surface (10_out), from the crown zone (11) to the lateral zone (12, 13) in question.

3. Tool according to Claim 2, **characterized in that** the core (10) comprises an assembly of a plurality of annular sub-assemblies (21, 22, 23) comprising:
i) a first annular sub-assembly (21) referred to as the "central ring" (21), which forms a central portion of the crown zone (11) of the receiving surface (10_out) suitable for receiving one or more components forming the crown (3) of the tyre (2), said central ring (21) preferably being without passages (15) for stays (16),
ii) a second annular sub-assembly (22) referred to as the "left lug" (22), which is axially adjacent to the central ring (21), said left lug (22) comprising the first lateral zone (12) of the receiving surface (10_out) as well as a portion of the crown zone (11) that axially extends the central portion of the crown zone (11) on the corresponding side of the central ring (21), and said left lug (22) containing the grooves (15) forming the passages for the stays (16) that connect the first sidewall (6) of the tyre to the crown (3) of the tyre, and
iii) a third annular sub-assembly (23) referred to as the "right lug" (23), which is axially adjacent to the central ring (21), on the side of the central ring that is axially opposite the side receiving the left lug (22), said right lug (23) comprising the second lateral zone (13) of the receiving surface (10_out) as well as a portion of the crown zone (11) that axially extends the central portion of the crown zone (11) on the corresponding side of the central ring (21), and said right lug (23) containing the grooves (15) forming the passages for the stays (16) that connect the second sidewall (7) of the tyre to the crown (3) of the tyre and **in that** said annular sub-assemblies (21, 22, 23), namely the central ring (21), the left lug (22) and the right lug (23), are each angularly split into sectors (24, 25, 26, 27, 28, 29) azimuthally about the central axis (Z10), with alternating sectors referred to as "keys" (24, 26, 28) designed to be accessible radially from the inside and to be removed first on the dismantling of the sub-assembly (21, 22, 23) in question, and sectors referred to as "arch segments" (25, 27, 29), supported and locked in position by the keys (24, 26, 28), and designed to become manoeuvrable after they have been released by the removal of the keys (24, 26, 28).

4. Tool according to Claim 3, **characterized in that** the flanks (40, 41) of at least one lug key (26, 28), which define the angular sector (A26) occupied by said lug key azimuthally about the central axis (Z10) and thus form the parting lines (PJ) along which said lug key (26, 28) interacts with the lug arch segments (27, 29) adjacent to said lug key (26, 28) within the annular sub-assembly (22), are parallel to an imaginary plane referred to as the "sagittal meridian plane" (P_MER_26), which corresponds to the radial plane that contains the central axis (Z10) and intersects the middle of the angular sector (A26) occupied by the lug key (26, 28) in question, so that said flanks (40, 41) allow the extraction of the lug key (26, 28) from the lug arch segments (27, 29) adjacent to it by sliding and/or tilting along said parting lines (PJ).

5. Tool according to one of Claims 3 and 4, **characterized in that** the grooves (15) in a single lug sector (26, 27, 28, 29) are each delimited by two lateral walls that are generated in an axial generative direction (DG_A) parallel to the central axis (Z10), or that form taper faces that flare from the bottom (19) of the groove to the receiving surface (10_out) so as to open up, in the whole of the inside of the groove (15) in question, a free space that contains an imaginary volume referred to as the "necessary clearance volume", generated by virtually moving the stay (16) in question along a virtual exit trajectory contained in an axial generative direction (DG_A) parallel to the central axis (Z10), so that said grooves (15) allow the axial extraction of the lug sector (26, 27, 28, 29) in question, in an axial extraction movement (M_A) parallel to the central axis (Z10) and directed towards the equatorial plane (P_EQ) of the core (10), without the lateral walls of said grooves (15) interfering with the stays (16) during said axial extraction movement (M_A).

6. Tool according to one of Claims 2 to 5, **characterized in that** the grooves (15) are generated along radial planes containing the central axis (Z10), so as to make it possible to place stays (16) extending along said radial planes within the tyre (2).

7. Tool according to one of Claims 2 to 5, **characterized in that** the grooves (15) are criss-crossed so as to describe a grid on the receiving surface (10_out), in order to make it possible to place crossed stays (16) within the tyre (2).

8. Tool according to Claim 7 and Claim 3, **characterized in that** the criss-crossed grooves (15) in a single lug sector (26, 27, 28, 29) are each delimited by two lateral walls that are generated in an oblique generative direction (DG_O), which is contained in the radial plane that intersects the middle of the lug sector in question, referred to as the "sagittal meridian plane" (P_MER_26, P_MER_27) and which, in said sagittal meridian plane, converges towards the central axis (Z10) in the direction going from the lug (22, 23) in question towards the opposite lug (23, 22), and forms with the central axis (Z10) an angle, referred to as the "colatitude angle" (A44), which is non-zero and strictly less than 90 degrees, preferably between 30 degrees and 50 degrees, for example between 40 and 47 degrees.

9. Tool according to Claim 8, **characterized in that** the flanks (40, 41), and therefore the parting lines (PJ), which define the lug key (26, 28) in question, are generated in the oblique generative direction (DG_O) on the basis of a base profile (45) that corresponds i) either, according to a first option, to the intersection (46) of the receiving surface (10_out) and a radial plane (P1, P2) that is angularly offset azimuthally relative to the sagittal meridian plane (P_MER_26) of said lug key (26, 28) by a value such that the base profile (45) passes through the opposite vertices of the units of the grid, preferably quadrilaterals, which are defined on the receiving surface by the criss-crossed grooves (15) that follow on from each other from the crown zone (11) to the lateral zone (12, 13) along said base profile (45), ii) or, according to a second option, to the zigzag broken line (47) formed, on the receiving surface (10_out), by the alternating sides of the units of the grid, preferably quadrilaterals, which are defined on the receiving surface by the criss-crossed grooves (15) and follow on from each other from the crown zone (11) to the lateral zone (12, 13).

10. Tool according to one of the preceding claims, **characterized in that** the passages (15) for the stays (16) are delimited by lateral walls, and **in that** the core (10) has, on the back of said lateral walls, below the receiving surface (10_out), and penetrating between the passages (15), recesses (50) that are distinct from the passages (15) and separated from said passages (15) by the lateral walls.

11. Tool according to one of the preceding claims, **characterized in that** it comprises a barrier device (60) that interacts with the core (10) to obstruct the penetration of the components forming the crown (3), the sidewalls (6, 7) or the beads (4, 5) of the tyre into the passages (15) of the core (10) in which the stays (16) are engaged.

12. Method for manufacturing a toroidal tyre (2) comprising a crown (3) suitable for forming a tread, a first annular bead (4) and a second annular bead (5) designed to make it possible to attach the tyre (2) to a mounting support such as a rim, together with a first sidewall (6) and a second sidewall (7) that connect the crown (3) to the first bead (4) and to the second bead (5) respectively, the crown (3), the first and second sidewalls (6, 7) and the first and second beads (4, 5) as a whole forming a wall (8) having a concave inner surface (8_in) that defines a cavity (9) of the tyre, said tyre (2) comprising reinforcing elements (16), referred to as "stays" (16) that each extend in the cavity (9) of the tyre, connecting a crown anchor point (17) situated in the crown (3) of the tyre to a lateral anchor point (18) situated in one of the sidewalls (6, 7) or beads (4, 5) of the tyre, said method comprising a preparation step (S0) during which a tool (1) according to any one of Claims 1 to 11 is prepared, a step (S2) of placing stays (16), during which a reinforcing thread (70), suitable for forming a stay (16), is passed through each passage (15) of the core (10), preferably using a continuous reinforcing thread (70) that is arranged in a snake through the successive passages (15) by taking said continuous reinforcing thread (70) back and forth in one piece from one lateral zone (12) of the core (10) to the other lateral zone (13), passing through the crown zone (11), then a packing step (S4) during which the components forming the crown (3), the sidewalls (6, 7) and the beads (4, 5) of the tyre are deposited on the receiving surface (10_out), preferably by winding said components onto the rotating core (10), in order to build the wall (8) of the tyre (2), then a curing step (S5), then a demoulding step (S6) during which the core (10) is disengaged from the tyre (2), leaving the stays (16) in place in the cavity (9) of said tyre (2).

13. Method according to Claim 12, **characterized in that**, following the preparation step (S0), and before the step (S2) of placing the stays (16), said method comprises a pre-packing step (S1) during which anchor structures (71, 72) that are designed to receive the ends of the stays (16) that emerge from the passages (15) of the core and to adhere to the components forming the sidewalls (6, 7), the beads (4, 5) or the crown (3) respectively, by sandwiching said ends of the stays (16) between the anchor structures (71, 72) and said components, in order to fasten the stays (16) to the anchor points (18, 17) provided, are laid on the lateral zones (12, 13) and on the crown zone (11) of the receiving surface (10_out) of the core, facing the anchor points (18, 17) provided for attaching the stays (16) to the wall (8) of the tyre.

14. Method according to Claim 12 or 13, **characterized in that**, as the core (10) comprises a central ring (21), and a left lug (22) and a right lug (23) containing the passages (15) for stays (16) in the form of grooves (15) that are open on the receiving surface (10_out), each of said central ring (21) and lugs (22, 23) being angularly split into sectors forming keys (24, 26, 28) alternating with arch segments (25, 27, 29), the demoulding step (S6) firstly comprises a sub-step of removing the central ring (21), during which the keys (24) of the central ring, then the arch segments (25) of the central ring, are radially removed, in order to release the lugs (22, 23), then a second sub-step of extracting a first lug (22) during which the keys (26) of one (22) of the left and right lugs are extracted from the cavity (9) of the tyre, then the arch segments (27) of said lug are extracted from the cavity (9) of the tyre, in order to release the corresponding portion of the cavity and the stays (16) that are located in said corresponding portion of the cavity, and a third sub-step of extracting the other lug (23) during which the keys (28) of the other lug are extracted from the cavity (9) of the tyre, then the arch segments (29) of said other lug are extracted from the cavity (9) of the tyre, in order to release the corresponding portion of the cavity and the stays (16) that are located in said corresponding portion of the cavity, and **in that** the sectors (26, 27, 28, 29) of each lug are extracted in an extraction movement that depends on the arrangement of the lateral walls of the grooves (15), namely
i) in an axial translational extraction movement (M_A), preferably followed by a tilting movement (M_B) about an axis normal to the sagittal meridian plane (P_MER_26, P_MER_27) of the sector (26, 27, 28, 29) in question, if the lateral walls of the grooves (15) are generated in an axial generative direction (DG_A) parallel to the central axis (Z10), or
ii) or in an oblique centripetal translational movement (M_O), simultaneously comprising an axial component and a radial component, if the lateral walls of the grooves (15) are generated in an oblique generative direction (DG_O) that intersects the central axis (Z10) at a non-zero acute colatitude angle (A44).

15. Method according to one of Claims 12 to 14, **characterized in that**, after the step (S2) of placing stays (16), said method comprises a protection step (S3), during which a barrier device (60) is implemented which, during the packing step (S4) and during the curing step (S5), interacts with the core (10) to obstruct the penetration of the components forming the crown (3), the sidewalls (6, 7) or the beads (4, 5) of the tyre (2) into the passages (15) of the core (10) in which the stays (16) are engaged, for example by applying to the receiving surface, before the packing step (S4), masking elements (61, 63), such as shells (61) and/or masking strips (63), that cover the passages (15) and thus form a screen between said passages (15) and the components of the wall (8) of the tyre, or by using a filling element (65) that temporarily fills, at least during the curing step (S5), the volume of each passage (15) that is left free between the stay (16) engaged in said passage (15) and the opening(s) of said passage (15) that emerge(s) on the receiving surface (10_out).
